# EUROPEAN PATENT SPECIFICATION

(11) **EP 4 503 830 B1**
(45) Date of publication and mention of the grant of the patent: **29.04.2026**
(21) Application number: 22936854.3
(22) Date of filing: 13.04.2022
(51) Int. Cl.: H04W 74/08, H04L 5/00, H04L 27/26, H04W 74/0808, H04W 92/18

(54) **WIRELESS COMMUNICATION METHOD AND TERMINAL DEVICE**
DRAHTLOSKOMMUNIKATIONSVERFAHREN UND ENDGERÄTEVORRICHTUNG
PROCÉDÉ DE COMMUNICATION SANS FIL ET DISPOSITIF TERMINAL

(43) Date of publication of application: 05.02.2025
(73) Proprietor: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN)
(74) Representative: RGTH
(86) International application number: PCT/CN2022/086546
(87) International publication number: WO 2023/197200

(56) References cited:
- WO-A1-2021/208031
- WO-A1-2022/067484
- CN-A- 113 892 276
- CN-A- 114 051 747
- US-A1- 2021 092 783
- US-A1- 2021 368 351
- US-A1- 2023 232 457
- US-A1- 2024 381 398
- "3rd Generation Partnership Project; Technical Specification Group Services and System Aspects; Release 16 Description; Summary of Rel-16 Work Items (Release 16)", no. V16.1.0, 5 January 2022 (2022-01-05), pages 1 - 166, XP052118329, Retrieved from the Internet <URL:https://ftp.3gpp.org/Specs/archive/21_series/21.916/21916-g10.zip 21916-g10.docx> [retrieved on 20220105]

## Description

### TECHNICAL FIELD

Embodiments of the present application relate to the field of communication, and more specifically, to a wireless communication method, a first terminal device, and a second terminal device.

### BACKGROUND

In a case where a sidelink (SL) system operates over an unlicensed spectrum or a shared spectrum, a terminal device is required to perform listen before talk (LBT) to determine whether a channel is idle. If the channel is idle, the terminal device may access the channel for sidelink transmission, otherwise the terminal device cannot access the channel. In a sidelink over unlicensed spectrum (SL-U) system, a terminal device may perform a type 1 (Type1) channel access. If a channel is determined to be idle, the terminal device may perform sidelink transmission, and initiate channel occupancy time (COT) sharing to share a COT with other terminal devices. If sidelink transmission resources or sidelink transmission opportunities of the other terminal devices are located within a time range corresponding to the COT, the other terminal devices may perform a Type 2A (Type2A), Type 2B (Type2B) or Type 2C (Type2C) channel access.

However, there is no relevant technical solution in the art regarding which specific channel access type the other terminal devices should use for channel access.

Document WO 2022/067484 A1 discloses a COT sharing mechanism to realize COT sharing, in which a first device node acquires a first resource shared by a second device node, and the first resource is a part of resources within the COT when the second device node accesses a first channel and initialtes the COT.

### SUMMARY

The embodiments of the present application provide a wireless communication method, a first terminal device, and a second terminal device, which allow the first terminal device to select an appropriate channel access type for channel access when using a COT shared from the second terminal device, thereby improving data transmission performance.

In a first aspect, the present provides a wireless communication method, which is defined in claim 1.

In a second aspect, the present application provides a first terminal device, which is defined in claim 13.

In a third aspect, the present application provides a computer-readable storage medium, which is defined in claim 14.

In a fourth aspect, the present application provides a computer program product, which is defined in claim 15.

Further advantageous embodiments of the present disclosure are indicated in the dependent claims. It is to be understood that both the foregoing general description and the following detailed description are exemplary only, and are not restrictive of the present disclosure.

### BRIEF DESCRIPTION OF THE DRAWINGS

FIGS. 1 to 7 are example diagrams illustrating scenarios provided by the present application.
FIG. 8 is a schematic diagram illustrating sidelink feedback provided by the present application.
FIG. 9 is an example diagram of a slot sturcture not including a PSFCH channel provided by an embodiment of the present application.
FIG. 10 is an example diagram of a slot sturcture including a PSFCH channel provided by an embodiment of the present application.
FIG. 11 is an example diagram illustrating COT sharing on a base station side provided by an embodiment of the present applicaiton.
FIG. 12 is a schematic flowchart of a wireless communication method provided by an embodiment of the present application.
FIG. 13 is a schematic diagram illustrating a first terminal device performing a type 2 channel access provided by an embodiment of the prsent application.
FIGS. 14 to 17 are example diagrams each illustrating a target channel access type used by a first terminal device provided by embodiments of the present application.
FIG. 18 is another schematic flowchart of a wireless communication method provided by an embodiment of the present application.
FIG. 19 is a schematic block diagram of a first terminal device provided by an embodiment of the present application.
FIG. 20 is a schematic block diagram of a communication device probided by an embodiment of the present application.
FIG. 21 is another schematic block diagram of a communication device provided by an embodiment of present application.
FIG. 22 is a schematic block diagram of a chip provided by an embodiment of the present application.

### DETAILED DESCRIPTION

Technical solutions in the embodiments of the present application will be described with reference to the accompanying drawings.

The embodiments of the present application are applicable to any terminal device to terminal device communication architecture, such as vehicle to vehicle (V2V), behicle to everything (V2X), device to device (D2D). The terminal device in the present application may be any device or apparatus configured with a physical layer and a media access control layer, and the terminal device may also be referred to as an access terminal, such as a user equipment (UE), a subscriber unit, a subscriber station, a mobile station, a mobile console, a remote station, a remote terminal, a mobile device, a user terminal, a terminal, a wireless communication device, a user agent or a user apparatus. The access terminal may be a cellular phone, a cordless phone, a session initiation protocol (SIP) phone, a wireless local loop (WLL) station, a personal digital assistant (PDA), a handheld device having a wireless communication function, a computing device or other linear processing device connected to a wireless modem, a vehicle-mounted device, or a wearable device, etc. The embodiments of the present invention will be described by taking a vehicle-mounted terminal as an example, but are not limited thereto.

Technical solutions in the embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunications system (UMTS), a wireless local area network (WLAN), a wireless fidelity (WiFi) system, a 5th-Generation (5G) communication system, and other communication systems.

Generally, traditional communication systems support a limited quantity of connections, and are easy to implement. However, with the development of communication technology, mobile communication systems will not only support traditional communication, but also support, for example, device to device (D2D) communication, machine to machine (M2M) communication, machine type communication (MTC), vehicle to vehicle (V2V) communication, and vehicle to everything (V2X) communication, and the embodiments of the present application may be applied to these communication systems as well.

Optionally, the communication systems in the present application may be applied to a carrier aggregation (CA) scenario, a dual connectivity (DC) scenario, or a standalone (SA) networking scenario.

Optionally, the communication systems in the present application may be applied to an unlicensed spectrum, which may also be considered as a shared spectrum. The communication systems in the present application may also be applied to a licensed spectrum, which may also be considered as an unshared spectrum.

The embodiments of the present application are described in combination with a network device and a terminal device. The terminal device may also be referred to as a user equipment (UE), an access terminal, a subscriber unit, a subscriber station, a mobile station, a mobile platform, a remote station, a remote terminal, a mobile device, a user terminal, a terminal, a wireless communication device, a user agent or a user apparatus.

The terminal device may be a station (ST) in the WLAN, or may be a cellular phone, a wireless phone, a session initiation protocol (SIP) phone, a wireless local loop (WLL) station, a personal digital assistant (PDA) device, a handheld device with a wireless communication function, a computing device or another processing device connected to a wireless modem, a vehicle-mounted device, a wearable device, a terminal device in a next generation communication system (e.g., an NR network), or a terminal device in a future evolved public land mobile network (PLMN).

In the present application, the terminal device may be deployed on land including indoor or outdoor, handheld, wearable or vehicle-mounted; alternatively, the terminal device may be deployed on water (such as on ships); alternatively, the terminal device may be deployed aerially (such as in airplanes, balloons and satellites).

In the present application, the terminal device may be a mobile phone, a Pad, a computer with wireless transceiving function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example rather than limitation, the terminal device in the present application may be a wearable device. The wearable device may also be referred to as a wearable smart device, which is a general term of wearable devices developed by intelligent design on daily wear by applying wearable technology, such as glasses, gloves, a watch, clothing and shoes. The wearable device is a portable device that is worn directly on a body, or integrated into clothes or accessories of users. The wearable device not only is a hardware device, but also implements powerful functions through software support as well as data interaction or cloud interaction. Generalized wearable smart devices include devices which are fully functional, have large sizes, and may implement complete or partial functions without relying on smart phones, such as a smart watch or smart glasses, and devices which focus on a certain kind of application functions only and need to be used in conjunction with other devices such as smart phones, such as various smart bracelets, and smart jewelries for monitoring physical signs.

In the present application, the network device may be a device configured to communicate with a mobile device, and may be an access point (AP) in the WLAN, a base transceiver station (BTS) in GSM or CDMA, a NodeB (NB) in WCDMA, an evolutional node B (eNB or eNodeB) in LTE, a relay station, an access point, a vehicle-mounted device, a wearable device, a network device or a gNB in an NR network, a network device in the future evolved PLMN network, or a network device in an NTN network.

As an example rather than limitation, the network device in the present application may have mobility characteristics. For example, the network device may be a mobile device. Optionally, the network device may be a satellite, or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station disposed in a position on land or in a water region.

In the present application, the network device may provide a service for a cell, and the terminal device communicates with the network device through a transmission resource (e.g., a frequency-domain resource, or in other words, a spectrum resource) used by the cell. The cell may be a cell corresponding to the network device (e.g., a base station), and the cell may belong to a macro base station, or may belong to a base station corresponding to a small cell. The small cell may include a metro cell, a micro cell, a pico cell, a femto cell, or the like. These small cells are characterized by a small coverage range and a low transmission power, and are suitable for providing high-speed data transmission services.

It should be understood that the terms "system" and "network" are often used interchangeably herein. The term "and/or" herein refers to an association relationship describing associated objects only, which indicates that there may be three kinds of relationships. For example, "A and/or B" may indicate three cases that: A exists alone, both A and B exist, and B exists alone. In addition, the character "/" herein generally indicates that related objects before and after the character "/" are in an "or" relationship.

Terminologies used in the detailed description of the present application are only for the purpose of explaining specific embodiments of the present application, and are not intended to limit the present application. Terms "first", "second", "third", "fourth", and the like in the specification, claims and drawings of the present application are used to distinguish different objects and not used to describe a specific order. In addition, terms "include" and "have" and any variations thereof are intended to cover non-exclusive inclusion.

It should be understood that "indication" involved in the embodiments of the present application may be a direct indication, may be an indirect indication, or may represent an association relationship. As an example, that A indicates B may mean that A indicates B directly, for example, B can be acquired through A; or it may mean that A indicates B indirectly, for example, A indicates C, and B can be acquired through C; or it may mean that there is an association between A and B.

In the description of the embodiments of the present application, the term "correspond" may mean that there is a directly corresponding or an indirectly corresponding relationship between two parties, or mean that there is an association between two parties, or mean a relationship such as indicating and being indicated, or configuring and being configured.

In the present application, "predefined" may be achieved by pre-storing corresponding codes, tables or other manners that may be used to indicate relevant information in devices (e.g., including a terminal device and a network device). The specific implementation is not limited in the present application. For example, "predefined" may refer to those defined in a protocol. In the present application, the "protocol" may refer to a standard protocol in the communication field, for example, may include an LTE protocol, an NR protocol, and a related protocol applied in a future communication system, which are not limited in the present application.

In the embodiments of the present application, a wireless communication method is provided. The method is performed by a first terminal device and includes:
obtaining a first sidelink transmission opportunity for the first terminal device; where
a time unit where the first sidelink transmission opportunity is located is within a channel occupation time (COT) shared from a second terminal device;
determining a target channel access type to be used by the first terminal device based on first information; where
the first information includes at least one of the following information:
   a first sidelink subcarrier spacing (SCS);
   first indication information, where the first indication information is used to indicate a first channel access type and/or a first duration, the first duration results in a duration of a first gap between a start time of the first sidelink transmission opportunity and an end time of a second sidelink transmission opportunity to meet a duration needed for a channel access type, and the second sidelink transmission opportunity is a sidelink transmission opportunity prior to and adjacent to the first sidelink transmission opportunity;
   a detection result directed to the second sidelink transmission opportunity;
   the first gap; or
   a channel type of a channel to be transmitted, where the channel to be transmitted is a channel to be transmitted by the first terminal device in the first sidelink transmission opportunity.

In a possible implementation, determining the target channel access type to be used by the first terminal device based on the first information includes:
based on a first correspondence, determining a channel access type corresponding to the first sidelink SCS as the target channel access type; where
the first correspondence includes a conrrespondence between at least one sidelink SCS and at least one channel access type, and the at least one sidelink SCS includes the first sidelink SCS.

In a possible implementation, the first sidelink SCS is 15 kHz or 30 kHz, and the target channel access type is Type 2A.

In a possible implementation, the first sidelink SCS is 60 kHz, and the target channel access type is Type 2B or Type 2C.

In a possible implementation, the method further includes:
determining a second duration according to pre-configuration information or network configuration information; where
a difference between a duration corresponding to one orthogonal frequency division multiplexing (OFDM) symbol and the second duration is less than or equal to 16 microseconds; and
performing a transmission lasting the second duration before a start time of a sidelink transmission or after an end time of the sidelink transmission.

In a possible implementation, the first sidelink SCS is 120 kHz, and the target channel access type is Type 2C.

In a possible implementation, the first correspondence is predefined information, or the first correspondence is pre-configuration information, or the first correspondence is network configuration information, or the first correspondence is information configured by the second terminal device.

In a possible implementation, the first indication information is used to indicate a first channel access type;
determining the target channel access type to be used by the first terminal device based on the first information includes:
determining the first channel access type as the target channel access type.

In a possible implementation, the method further includes:
determining the first duration according to a duration corresponding to one OFDM symbol and a duration required to meet the first channel access type.

In a possible implementation, the first indication information is used to indicate the first duration; the method further includes:
obtaining a first difference, where the first difference is a difference between a duration corresponding to one orthogonal frequency division multiplexing (OFDM) symbol and the first duration; and
determining the target channel access type according to the first difference;
where the first difference meets at least one of the following:
   greater than or equal to 25 microsecond (µs);
   equal to 16 µs; or
   less than or equal to 16 µs.

In a possible implementation, determining the target channel access type according to the first difference includes:
if the first difference is greater than or equal to 25 microsecond (µs), determining Type 2A channle access as the target channel access type; and/or
if the first difference is equal to 16 µs, determining Type 2B channle access as the target channel access type; and/or
if the first difference is less than or equal to 16 µs, determining Type 2C channle access as the target channel access type.

In a possible implementation, the method further includes:
obtaining second indication information, where the second indication information is used to indicate performing a transmission lasting the first duration before a start time of a sidelink transmission or after an end time of the sidelink transmission; and
determining, according to the second indication information, to perform the transmission lasting the first duration before the start time of the sidelink transmission or after the end time of the sidelink transmission.

In a possible implementation, the second indication information is used to indicate performing the transmission lasting the first duration before the start time of the sidelink transmission; the method further includes:
performing channel access according to the target channel access type; and
if the channel access succeeds, performing the transmission lasting the first duration and the sidelink transmission.

In a possible implementation, the second indication information is used to indicate performing the transmission lasting the first duration after the end time of the sidelink transmission; the method further includes:
performing channel access according to the target channel access type; and
if the channel access succeeds, performing the sidelink transmission and the transmission lasting the first duration.

In a possible implementation, the transmission lasting the first duration includes data determined according to at least one of the following: cyclic prefix (CP) extension, repetition of data on any orthogonal frequency division multiplexing (OFDM) symbol, a redundant bit, or a padding bit.

In a possible implementation, the second indication information is predefined information, or the second indication information is pre-configuration information, or the second indication information is information configured by a network device, or the second indication information is information configured by the second terminal device.

In a possible implementation, a priority class of a channel access type determined according to the first indication information is higher than a priority class of a channel access type determined according to the first sidelink SCS.

In a possible implementation, the first indication information is predefined information, or the first indication information is pre-configuration information, or the first indication information is information configured by a network device, or the first indication information is information configured by the second terminal device.

In a possible implementation, the detection result includes at least one of following:
whether SCI or a PSCCH is detected;
a sidelink RSRP measurement value;
a sidelink RSSI measurement value;
whether a PSFCH is detected; or
whether a primary synchronization signal, a secondary synchronization signal, or a PSBCH is detected.

In a possible implementation, determining the target channel access type to be used by the first terminal device based on the first information includes:
if the detection result is used to indicate that the first terminal device has detected a sidelink transmission in the second sidelink transmission opportunity, determining the target channel access type based on the first sidelink SCS and/or the first indication information; and/or
if the detection result is used to indicate that the first terminal device has not detected a sidelink transmission in the second sidelink transmission opportunity, determining a second channel access type as the target channel access type.

In a possible implementation, determining the target channel access type to be used by the first terminal device based on the first information includes:
if the detection result includes a sidelink reference signal received power (RSRP) measurement value, and the sidelink RSRP measurement value is greater than or equal to a first threshold value, determining the target channel access type based on the first sidelink SCS and/or the first indication information; and/or
if the sidelink RSRP measurement value is less than the first threshold value, determining a second channel access type as the target channel access type.

In a possible implementation, determining the target channel access type to be used by the first terminal device based on the first information includes:
if the detection result includes a sidelink received signal strength indication (RSSI) measurement value, and the sidelink RSSI measurement value is greater than or equal to a second threshold value, determining the target channel access type based on the first sidelink SCS and/or the first indication information; and/or
if the sidelink RSSI measurement value is less than the second threshold value, determining a second channel access type as the target channel access type.

In a possible implementation, determining the target channel access type to be used by the first terminal device based on the first information includes:
if the detection result includes that SCI or a PSCCH is detected, determining the target channel access type based on the first sidelink SCS and/or the first indication information; and/or
if the detection result includes that no SCI or PSCCH is detected, determining a second channel access type as the target channel access type; and/or
if the detection result includes that the SCI or PSCCH is detected, and a sidelink RSRP measurement value is greater than or equal to a third threshold value, determining the target channel access type based on the first sidelink SCS and/or the first indication information; and/or
if the detection result includes that the SCI or PSCCH is detected, and the sidelink RSRP measurement value is less than the third threshold value, determining the second channel access type as the target channel access type; where the sidelink RSRP measurement value includes an RSRP measurement value based on PSCCH DMRS or an RSRP measurement based on PSSCH DMRS.

In a possible implementation, determining the target channel access type to be used by the first terminal device based on the first information includes:
if the detection result includes that a primary synchronization signal, a secondary synchronization signal or a PSBCH is detected, determining the target channel access type based on the first sidelink SCS and/or the first indication information; and/or
if the detection result includes that no primary synchronization signal, secondary synchronization signal or PSBCH is detected, determining a second channel access type as the target channel access type; and/or
if the detection result includes that the primary synchronization signal, the secondary synchronization signal or the PSBCH is detected, and a sidelink RSRP measurement value is greater than or equal to a fourth threshold value, determining the target channel access type based on the first sidelink SCS and/or the first indication information; and/or
if the detection result includes that the primary synchronization signal, the secondary synchronization signal or the PSBCH is detected, and the sidelink RSRP measurement value is less than the fourth threshold value, determining the the second channel access type as the target channel access type; where the sidelink RSRP measurement value includes an RSRP measurement value based on PSBCH DMRS.

In a possible implementation, determining the target channel access type to be used by the first terminal device based on the first information includes:
if the detection result includes that a PSFCH is detected, determining the target channel access type based on the first sidelink SCS and/or the first indication information; and/or
if the detection result includes that no PSFCH is detected, determining a second channel access type as the target channel access type.

In a possible implementation, the first threshold value is predefined information, or the first threshold value is pre-configuration information, or the first threshold value is information configured by a network device, or the first threshold value is information configured by the second terminal device.

In a possible implementation, the second threshold value is predefined information, or the second threshold value is pre-configuration information, or the second threshold value is information configured by a network device, or the second threshold value is information configured by the second terminal device.

In a possible implementation, the third threshold value is predefined information, or the third threshold value is pre-configuration information, or the third threshold value is information configured by a network device, or the third threshold value is information configured by the second terminal device.

In a possible implementation, the fourth threshold value is predefined information, or the fourth threshold value is pre-configuration information, or the fourth threshold value is information configured by a network device, or the fourth threshold value is information configured by the second terminal device.

In a possible implementation, the first threshold value is a threshold value determined according to at least one of the following information: a sidelink priority, a channel access priority class, a channel busy rate (CBR).

In a possible implementation, the second threshold value is a threshold value determined according to at least one of the following information: a sidelink priority, a channel access priority class, or a channel busy rate (CBR).

In a possible implementation, the third threshold value is a threshold value determined according to at least one of the following information: a sidelink priority, a channel access priority class, or a channel busy rate (CBR).

In a possible implementation, the fourth threshold value is a threshold value determined according to at least one of the following information: a sidelink priority, a channel access priority class, or a channel busy rate (CBR).

In a possible implementation, the second channel access type includes a Type 2A channel access type.

In a possible implementation, the second channel access type is determined according to predefined information in a protocol, pre-configuration information, network configuration information, or configuration information of the second terminal device.

In a possible implementation, the method further includes:
determining whether to determine the target channel access type based on the detection result.

In a possible implementation, determining whether to determine the target channel access type based on the detection result includes:
obtaining third indication information;
if the third indication information is used to indicate determining the target channel access type based on the detection result, determining the target channel access type based on the detection result.

In a possible implementation, the third indication information is predefined information, or the third indication information is pre-configuration information, or the third indication information is information configured by a network device, or the third indication information is information configured by the second terminal device.

In a possible implementation, determining the target channel access type to be used by the first terminal device based on the first information includes:
if the first gap is greater than or equal to a fifth threshold value, determining a Type 2A channle access type as the target channel access type.

In a possible implementation, the fifth threshold value is predefined information, or the fifth threshold value is pre-configuration information, or the fifth threshold value is information configured by a network device, or the fifth threshold value is information configured by the second terminal device.

In a possible implementation, the first gap is determined according to resource pool configuration information.

In a possible implementation, the channel type of the channel to be transmitted includes at least one of the following: a physical sidelink control channel (PSCCH), a physical sidelink shared channel (PSSCH), a physical sidelink feedback channel (PSFCH), or a sidelink synchronization signal block (S-SSB).

In a possible implementation, determining the target channel access type to be used by the first terminal device based on the first information includes:
if the channel type of the channel to be transmitted includes at least one of a physical sidelink feedback channel (PSFCH) or a sidelink synchronization signal block (S-SSB), determining a third channle access type as the target channel access type, or directly transmitting the channel to be transmitted without performing channel access.

In a possible implementation, the third channel access type includes a Type 2C channel access type.

In a possible implementation, the third channel access type is determined according to predefined information, pre-configuration information, network device configuration information, or information configured by the second terminal device.

In a possible implementation, the method further includes:
performing channel access according to the target channel access type; and
determining whether to perform a sidelink transmission in the first sidelink transmission opportunity according to a result of the channel access.

In a possible implementation, determining whether to perform the sidelink transmission in the first sidelink transmission opportunity according to the result of the channel access includes:
if the channel access succeeds, performing the sidelink transmission by using the first sidelink transmission opportunity; or
if the channel access fails, abandoning the first sidelink transmission opportunity or performing resource reselection.

In a possible implementation, obtaining the first sidelink transmission opportunity for the first terminal device includes:
determining the first sidelink transmission opportunity based on network configuration information or scheduling information; or
determining a sidelink transmission opportunity selected by the first terminal device as the first sidelink transmission opportunity.

In a possible implementation, the method further includes:
receiving COT sharing information transmitted by the second terminal device.

In a possible implementation, the COT sharing information includes at least one of the following:
a channel access priority class;
a time offset, used to determine a start time of the shared COT;
duration information, used to indicate a shared COT duration or a remaining COT duration;
identification information, used to determine a terminal device that is allowed to use the shared COT; or
resource block set information or channel information for performing channel access by the second terminal device.

In a possible implementation, the method further includes:
determine whether it is allowed to use the shared COT according to at least one of the following:
a channel access priority class;
a priority of sidelink data or sidelink channel to be transmitted by the first terminal device;
identification information of the first terminal device;
group identification information of a group in which the first terminal device is located;
type information of a service to be transmitted by the first terminal device;
channel information or resource block set information corresponding to the first sidelink transmission opportunity; or
whether the second terminal device is a target receiving terminal of the sidelink data or sidelink channel to be transmitted by the first terminal device.

In the embodiments of the present application, another wireless communication method is provided. The method is performed by a second terminal device or a network deivce and includes:
transmitting second information to a first terminal device, where the second information is used by the first terminal device to determine a target channel access type when the first terminal device performs channel access within a channel occupation time (COT) shared from the second terminal device.

In a possible implementation, the second information includes at least one of the following:
a first correspondence, where the first correspondence includes a conrrespondence between at least one sidelink SCS and at least one channel access type;
first indication information, where the first indication information is used to indicate a first channel access type and/or a first duration;
second indication information, where the second indication information is used to indicate performing a transmission lasting the first duration before a start time of a sidelink transmission or after an end time of the sidelink transmission;
third indication information, where the third indication information is used to indicate determining the target channel access type based on a detection result of the first terminal device;
at least one threshold value corresponding to the detection result; or
a third channel access type.

In a possible implementation, the transmission lasting the first duration includes data determined according to at least one of the following: cyclic prefix (CP) extension, repetition of data on any orthogonal frequency division multiplexing (OFDM) symbol, a redundant bit, or a padding bit.

In a possible implementation, the method is applied to the second terminal device, and the method further includes:
transmitting COT sharing information to the first terminal device.

In a possible implementation, the COT sharing information includes at least one of the following:
a channel access priority class;
a time offset, used to determine a start time of the shared COT;
duration information, used to indicate a shared COT duration or a remaining COT duration;
sharing identification information, used to determine a terminal device that is allowed to use the shared COT; or
resource block set information or channel information for performing channel access by the second terminal device.

For the sidelink communication, depending on network coverage of the terminals in communicating, sidelink communication may be categorized into sidelink communication within network coverage, sidelink communication in partial network coverage, and sidelink communication out of network coverage.

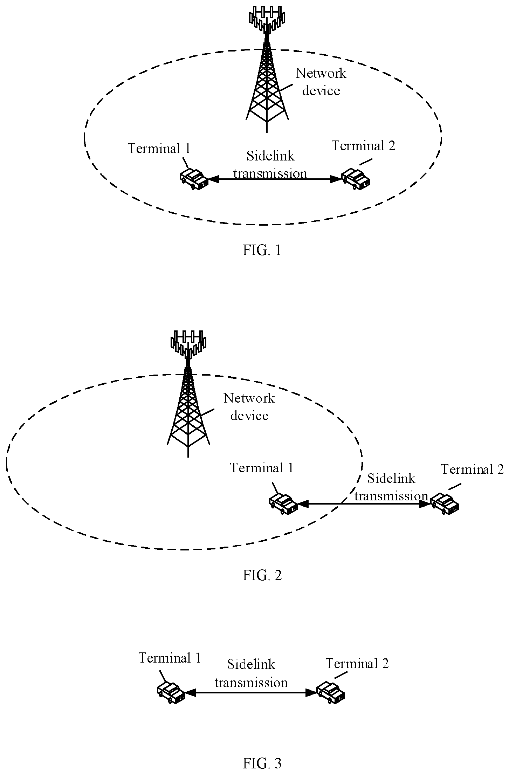

FIGS. 1 to 5 illustrate system architecture of vehicle-mounted terminal to vehicle-mounted terminal.

As shown in FIG. 1, in the sidelink communication within network coverage, all terminals (including terminal 1 and terminal 2) performing sidelink communication are within the coverage of the base station. Therefore, all the terminals can receive configuration signaling from the base station, and perform the sidelink communication based on the same sidelink configuration.

As shown in FIG. 2, in a case of the sidelink communication within partial network coverage, some of the terminals performing sidelink communication are located within the coverage of the base station. These terminals (e.g., terminal 1) can receive configuration signaling from the base station, and perform the sidelink communication according to a configuration of the base station. Terminals located out of the network coverage cannot receive the configuration signaling from the base station. In this case, the terminals located out of the network coverage will determine sidelink configuration according to pre-configuration information and information carried in a physical sidelink broadcast channel (PSBCH) transmitted by a terminal located within the network coverage, to perform the sidelink communication.

As shown in FIG. 3, in the case of the sidelink communication out of network coverage, all the terminals (including terminal 1 and terminal 2) performing sidelink communication are located out of the network coverage, and all the terminals determine sidelink configuration according to pre-configuration information, to perform the sidelink communication.

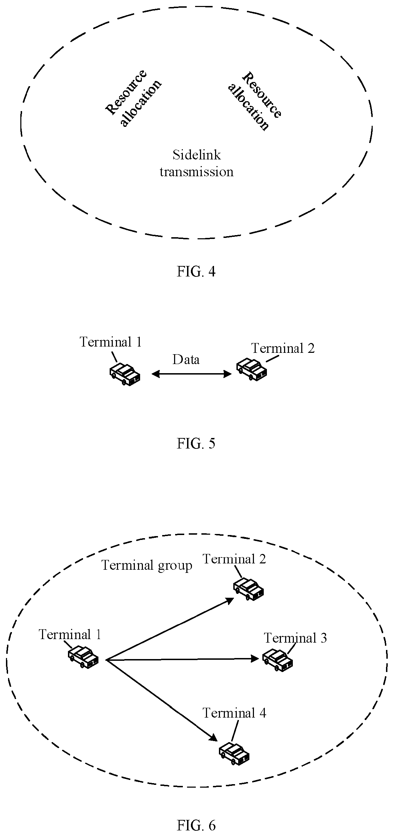

As shown in FIG. 4, in the case of sidelink communication with a central control node, a plurality of terminals (including terminal 1, terminal 2, and terminal 3) form a communication group. The communication group has a central control node, which may also be referred to as a cluster head (CH) terminal. The central control node has one of the following functions: responsible for an establishment of communication groups; reception and release of the group members; coordinating resources, allocating sidelink transmission resources to other terminals, and receiving sidelink feedback information from other terminals; or coordinating resources with other communication groups. For example, terminal 1 shown in FIG. 4 is the central control node of the communication group formed by terminal 1, terminal 2 and terminal 3.

Device-to-device communication is a sidelink (SL) transmission technology based on D2D. Unlike a way communication data is received or transmitted via the network device in traditional cellular system, a vehicle-to-everything system adopts direct terminal-to-terminal communication, resulting in higher spectrum efficiency and lower transmission delay. There are two transmission modes defined in the 3rd Generation Partnership Project (3GPP), which are referred to as a first mode and a second mode.

In the first mode:
transmission resources of a terminal are allocated by the network device, and the terminal transmits data over the sidelink according to the resources allocated by the network device. The network device may allocate resources for single transmission to the terminal, or allocate resources for semi-static transmission to the terminal. As shown in FIG. 1, the terminal is located within the network coverage, and the network allocates transmission resources for sidelink transmission to the terminal.

In the second mode:
a terminal selects resources in a resource pool to perform data transmission. As shown in FIG. 3, the terminal is located out of the coverage of a cell, and the terminal autonomously selects transmission resources in a pre-configured resource pool to perform sidelink transmission. Alternatively, as shown in FIG. 1, the terminal autonomously selects transmission resources in a resource pool configured by the network to perform sidelink transmission.

Autonomous driving is supported in NR-V2X, which puts forward higher requirements for data communication between vehicles, for example, higher throughput, lower latency, higher reliability, larger coverage, and more flexible resource allocation.

Unicast transmission, multicast transmission and broadcast transmission are supported in NR-V2X.

In the unicast transmission, only one terminal is the receiving terminal. FIG. 5 is a schematic diagram illustrating the unicast transmission provided by the present application. As shown in FIG. 5, the unicast transmission is performed between terminal 1 and terminal 2.

In the multicast transmission, the receiving terminals are all terminals in a communication group, or all terminals within a certain transmission distance.

FIG. 6 is a schematic diagram illustrating the multicast transmission provided by the present application.

As shown in FIG. 6, terminal 1, terminal 2, termianl 3, and terminal 4 form a communication group, terminal 1 transmits data, and the remaining terminal devices in the group are all receiving terminals.

In the broadcast transmission, the receiving terminal is any one terminal around the transmitting terminal.

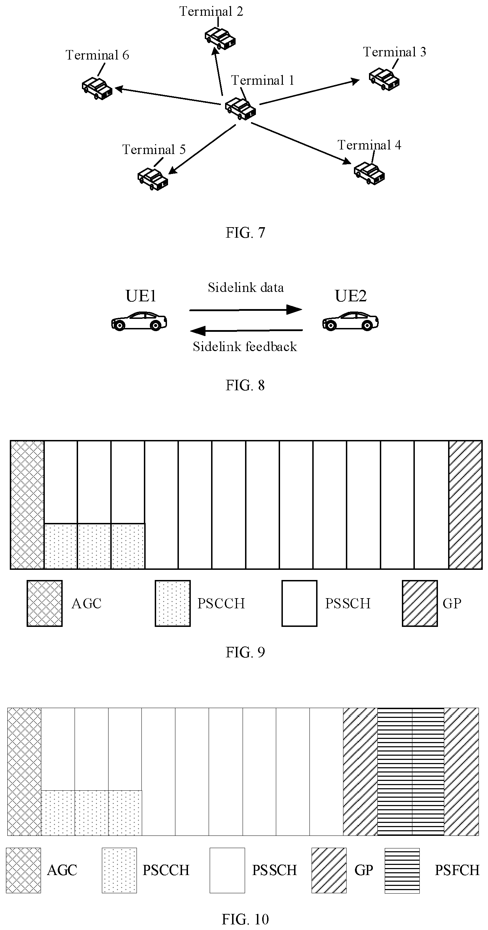

FIG. 7 is a schematic diagram illustrating the broadcast transmission provided by the present application.

As shown in FIG. 7, terminal 1 is the transmitting terminal, and the remaining terminals around it, i.e., therminal 2 to terminal 6, are all receiving terminals.

The sidelink feedback channel is introduced in NR-V2X to improve reliability.

FIG. 8 is a schematic diagram illustrating sidelink feedback provided by the present application.

As shown in FIG. 8, in unicast transmission, the transmitting terminal sends sidelink data (including the physical sidelink control channel (PSCCH) and the physical sidelink shared channel (PSSCH)) to the receiving terminal, and the receiving terminal sends hybrid automatic repeat request (HARQ) feedback information (including acknowledgement (ACK) or negative acknowledgement (NACK)) to the transmitting terminal. The transmitting terminal determines whether retransmission is needed according to the feedback information from the receiving terminal. The HARQ feedback information is carried in the sidelink feedback channel, such as the physical sidelink feedback channel (PSFCH).

For example, the sidelink feedback may be activated or deactivated through pre-configuration information or networkconfiguration information, or may be activated or deactivated via the transmitting terminal. If the sidelink feedback is activated, the receiving terminal receives the sidelink data sent by the transmitting terminal, and feeds back ACK or NACK to the transmitting terminal according to the detection result. The transmitting terminal decides to send retransmission data or new data according to the feedback information from the receiving terminal. If the sidelink feedback is deactivated, the receiving terminal does not need to send the feedback information, and the transmitting terminal generally sends data in a blind retransmission manner. For example, the transmitting terminal repeatedly sends each piece of sidelink data K times, instead of deciding whether to send retransmission data according to the feedback information from the receiving terminal.

The sidelink feedback is supported in the unicast mode and multicast transmission mode of the sidelink system, but is not supported in the broadcast transmission mode.

A slot structure in NR-V2X will be described below with reference to FIGS. 9 and 10.

FIG. 9 illustrates an example of a slot structure in which no PSFCH is included. FIG. 10 illustrates an example of a slot structure including a PSFCH.

As shown in FIG. 9 or FIG. 10, in a slot, the first OFDM symbol is generally used for automatic gain control (AGC), and on the AGC symbol, UE copies the information sent on the second symbol. The last symbol is leaved as one symbol of guard period (GP), which is used for UE to switch from a transmitting state to a receiving state, or from the receiving state to the transmitting state. PSCCH may occupy two or three OFDM symbols. In frequency domain, frequency domain starting positions of PSCCH and PSSCH are the same. If the number of PRBs occupied by PSCCH is less than the number of PRBs occupied by PSSCH, PSCCH may be frequency-division multiplexed with PSSCH on the OFDM symbol where PSCCH is located.

In other words, in one slot, PSCCH starts from the second sidelink symbol of the slot in time domain and occupies two or three OFDM symbols, and may occupy {10, 12 15, 20, 25} PRBs in frequency domain. To reduce complexity of blind detection performed by UE on PSCCH, only one PSCCH symbol quantity and only one PRB quantity are allowed to be configured in one resource pool. In addition, because a sub-channel is the minimum granularity for PSSCH resource allocation in NR-V2X, a quantity of PRBs occupied by PSCCH must be less than or equal to a quantity of PRBs included in one sub-channel in a resource pool, to avoid additional limitation on selection or allocation of PSSCH resources. PSSCH starts from the second sidelink symbol of the slot in time domain. The last time domain symbol in the slot is a guard period (GP) symbol, and the remaining symbols are mapped to PSSCH. The first sidelink symbol in the slot is a repetition of the second sidelink symbol. Generally, the receiving terminal uses the first sidelink symbol as an AGC symbol, and data on the symbol is generally not used for data demodulation. The PSSCH occupies Q sub-channels in frequency domain, and each sub-channel includes D consecutive PRBs, where Q and D are positive integers.

In NR-V2X, PSFCH resources are periodically configured. If there are PSFCH resources existed in a slot, the PSFCH are located in the last-but-two OFDM symbol in the slot. Since the UE's receiving power may change on the OFDM symbol where the PSFCH is located, the third last symbol in the slot will also be used for PSFCH transmission to assist the receiving UE in AGC adjustment. In addition, the UE sending PSSCH and the UE sending PSFCH may be different. As such, before the two PSFCH symbols, an additional GP symbol is needed for UE to swich between transmitting and receiving.

As shown in FIG. 9, there may be no PSFCH channel existed in the slot.

As shown in FIG. 10, in a case where the PSFCH channel is exised in the slot, the penultimate symbol and the third last symbol are used for transmitting or receiving PSFCH channel.

An unlicensed spectrum is a spectrum that is classified by a country and a region and that can be used for communication of a radio device. The spectrum is generally considered as a shared spectrum, that is, communication devices in different communication systems may use the spectrum as long as a regulatory requirement set for the spectrum by a country or a region is met, and there is no need to apply for a dedicated spectrum grant to a government.

In order to enable various communication systems that perform wireless communication by using an unlicensed spectrum to coexist on the spectrum, some countries or regions specify some regulatory requirements that must be met when the unlicensed spectrum is used. For example, a communication device follows a rule of "listen before talk (LBT)" , that is, before the communication device transmits a signal on a channel over an unlicensed spectrum, channel listening needs to be performed first, and the communication device can perform signal transmission only when a channel listening result is that the channel is idle; if the channel listening result of the communication device on the channel over the unlicensed spectrum is that the channel is busy, the communication device cannot perform signal transmission. To ensure fairness, in one transmission, a duration in which the communication device performs signal transmission on a channel over an unlicensed spectrum cannot exceed a maximum channel occupancy time (MCOT).

Signal transmission on a unlicensed spectrum (or a shared spectrum) involves the following basic concepts.

The maximum channel occupancy time (MCOT) refers to a maximum duration in which a channel over an unlicensed spectrum is allowed to be used for signal transmission after LBT succeeds, and there are different MCOTs for different channel access priority classes. Currently, the maximum value of the MCOT is 10 ms. It should be understood that the MCOT is a time occupied for signal transmission.

Channel occupancy time (COT) refers to a duration in which a channel over an unlicensed spectrum is allowed to be used for signal transmission after LBT succeeds, and channels occupied by a signal in the duration may be discontinuous. The maximum length of a COT cannot exceed 20 ms at a time, and a duration occupied for signal transmission in the COT does not exceed the MCOT.

Channel occupancy time of a network device (i.e., a base station) (gNB-initiated COT) is also referred to as COT initiated by the network device, and refers to a channel occupancy time obtained after LBT of the network device succeeds. In addition to being used for downlink transmission, the channel occupancy time of the network device may be used by UE for uplink transmission under a certain condition.

Channel occupancy time of a UE (UE-initiated COT) is also referred to as a UE-initiated COT, and refers to a channel occupancy time obtained after LBT of the UE succeeds.

Channel access modes in the NR-U system will be decribed below.

When using an unlicensed spectrum, a communication device needs to follow the principle of listen before talk (LBT), that is, the communication device listens to a channel for a period of time, and if the listening result shows that the channel is idle, the communication device can access the channel for transmission. In the standardization process of NR-U, the procedure and rule for performing LBT between a base station and a terminal has been formulated.

Channel access modes in NR-U mainly include a Type 1 channel access mode and a Type 2 channel access mode. The Type 1 channel access mode is a multi-slot channel detection based on random backoff with a contention window of variable size. A corresponding channel access priority class (CAPC) p may be selected according to attributes or parameters of a service to be transmitted The Type 2 channel access mode is a channel access mode based on a listening slot with a fixed length. The Type 2 channel access mode includes Type 2A channel access, Type 2B channel access, and Type 2C channel access. Type 1 channel access mode is mainly used by a communication device to initiate channel occupation, and Type 2 channel access mode is mainly used by a communication device to share channel occupation.

### I. Type 1 channel access in NR-U

The base station is taken as an example, and channel access parameters corresponding to channel access priority class p on the base station side are shown in Table 1.

**Table 1 - Channel access parameters corresponding to different channel priority classes p**

| Channel access priority class (p) | mₚ | CW_{min,p} | CW_{max,p} | T_{mcot,p} | Allowed CWₚ value |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

In the above table, mp denotes a quantity of backoff slots corresponding to a channel access priority class p, CWₚ denotes a contention window size corresponding to a channel access priority class p, CW_{min,p} denotes a minimum value of CWₚ corresponding to a channel access priority class p, CW_{max,p} denotes a maximum value of CWₚ corresponding to a channel access priority class p, and T_{mcot,p} denotes a maximum channel occupancy duration corresponding to a channel access priority class p.

The base station may select a corresponding channel access priority p according to the attributes of a service to be transmitted (such as the 5G quality of service identifier (5QI)), and obtain, according to channel access parameters corresponding to the channel access priority p in Table 1, a channel occupancy time (COT) on an unlicensed spectrum carrier by using the Type 1 channel access mode. Within the obtained COT, the base station may perform continuous transmission or discontinuous transmission. The above-mentioned initiating, by the base station, COT by performing Type 1 LBT may specifically include the following steps:
Step (1): setting a value N of a counter to be Ninit (i.e., N=Nᵢₙᵢₜ), and performing Step (4), where Nᵢₙᵢₜ is a random number uniformly distributed between 0 and CWₚ;
Step (2): if N is greater than 0 (i.e., N>0), reducing, by the base station, the value of the counter by 1, i.e., N=N-1;
Step (3): performing listening slot detection with length Tₛₗ on a channel; if the channel is idle in a listening slot, performing Step (4); otherwise, performing Step (5); where Tₛₗ denotes an LBT listening slot, and the length thereof is 9 µs;
Step (4): if N is equal to 0 (i.e., N=0), ending the channle access process; otherwise, performing Step (2);
Step (5): performing listening slot detection with duration T_{d} (T_{d} =16 + mₚ×9 µs) on the channel, where the reslut of the listening slot detection is that at least one listening slot is occupied in one case, or that all listening slots are idle in another case;
Step (6): if the channel listening result is that all the listening slots within T_{d} are idle, performing Step (4); otherwise, performing Step (5).

If the channel access process ends, the base station may use the channel to perform transmission of a service to be transmitted. The maximum duration in which the base station can use the channel for transmission cannot exceed T_{mcot,p}.

In the NR-U system, if the terminal performs the Type 1 channel access, the terminal still performs the above Step (1) to Step (6), but a table of parameters corresponding to the channel access priority class is shown in Table 2.

**Table 2 - Channel access parameters corresponding to different channel access priority classes**

| Channel access priority class (p) | mₚ | CW_{min,p} | CW_{max,p} | T_{mcot,p} | Allowed CWₚ value |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 8 or 10 ms | {15,31,63,127,255,511,1023} |
| 4 | 7 | 15 | 1023 | 8 or 10 ms | {15,31,63,127,255,511,1023} |

### II. Type 2 channel access in NR-U

After a base station initiates a COT, in addition to using resources in the COT for downlink transmission, the base station may share the resources in the COT with a UE for uplink transmission. In a case where the resources in the COT are shared to a UE for uplink transmission, a channel access mode that can be used by the UE is the Type 2A channel access, the Type 2B channel access, or the Type 2C channel access. The Type 2A channel access, Type 2B channel access, and Type 2C channel access are all channel access modes based on a listening slot with a fixed length.

Type 2A channel access:
a channel detection mode performed by the UE is a 25 µs signal-slot channel detection. Specifically, according to the Type 2A channel access, the UE may perform channel listening for 25 µs before starting transmission, and perform transmission after the channel listening succeeds.

Type 2B channel access:
a channel detection mode performed by the UE is a 16 µs signal-slot channel detection. Specifically, according to the Type 2B channel access, the UE may perform channel listening for 16 µs before starting transmission, and perform transmission after the channel listening succeeds. A gap between a starting position of the transmission and an end position of the previous transmission is 16 µs.

Type 2C channel access:
the UE performs transmission without channel detection after a gap ends. Specifically, according to the Type 2C channel access, the UE may directly perform transmission. A size of a gap between a starting position of the transmission and an end position of the previous transmission is less than or equal to 16 µs, and the length of the transmission does not exceed 584 µs.

It should be noted that the channel access may also be refferred to as LBT. The above-mentioned Type 1 channel access mode, Type 2A channel access mode, Type 2B channel access mode, and Type 2C channel access mode are referred to as Type 1 LBT mode, Type 2A LBT mode, Type 2B LBT mode, and Type 2C LBT mode, respectively.

In different COT sharing scenarios, different channel access solutions are applied.

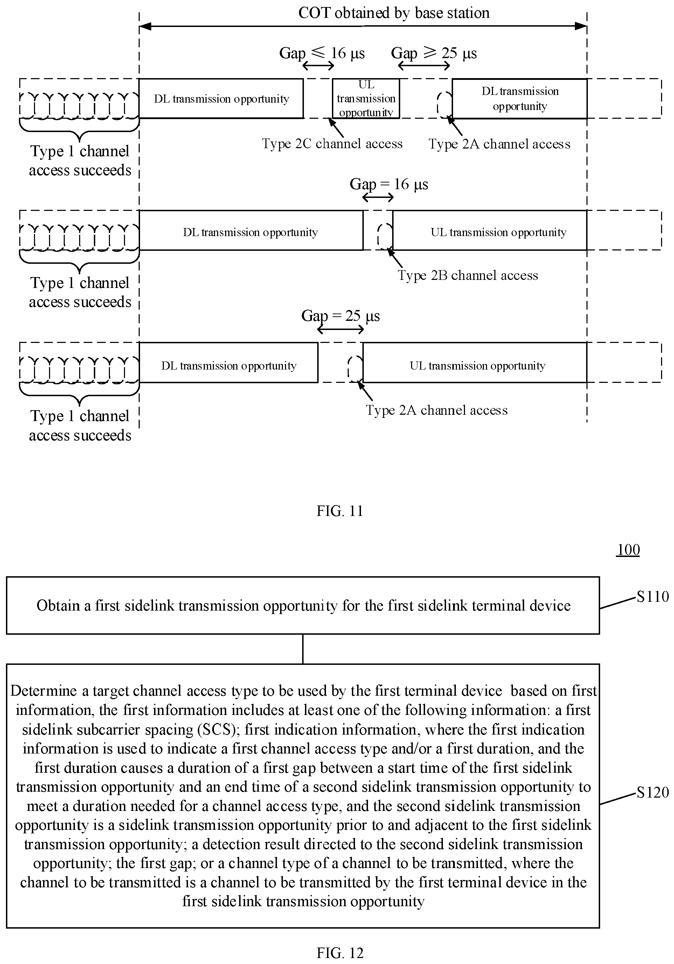

FIG. 11 is an example diagram illustrating COT sharing on a base station side provided by an embodiment of the present applicaiton.

As shown in FIG. 11, for an uplink transmission opportunity occurring within the COT of a base station, if a gap between a starting position of the uplink transmission opportunity and an end position of a downlink transmission opportunity is less than or equal to 16 µs, the UE may perform the Type 2C channel access before performing the uplink transmission. If the gap between the starting position of the uplink transmission opportunity and the end position of the downlink transmission opportunity is equal to or greater than 25 µs, the UE may perform the Type 2A channel access before performing the uplink transmission. If the gap between the starting position of the uplink transmission opportunity and the end position of the downlink transmission opportunity is equal to 16 µs, the UE may perform the Type 2B channel access before performing the uplink transmission. In addition, the COT obtained by the base station may include a plurality of uplink-downlink switching points. After the base station shares the COT it has obtained to the UE for uplink transmission, the base station may use the Type 2 channel access type (such as the Type 2A channel access type) to perform channel listening within the COT, and resume downlink transmission after the channel listening succeeds.

In a case where a sidelink (SL) system operates over an unlicensed spectrum or a shared spectrum, a terminal device is required to perform listen before talk (LBT) to determine whether a channel is idle. If the channel is idle, the terminal device may access the channel for sidelink transmission; otherwise the terminal device cannot access the channel. In a sidelink-unlicensed (SL-U) system, a terminal device may perform Type 1 channel access. If the terminal device determins that a channel is idle, the terminal device may perform sidelink transmission and initiate channel occupancy time (COT) sharing to share a COT with other terminal devices. If sidelink transmission resources or sidelink transmission opportunities of the other terminal devices are within a time range corresponding to the COT, the other terminal devices may perform the Type 2A (Type2A), Type 2B (Type2B) or Type 2C (Type2C) channel access.

In summary, in the case where the sidelink (SL) system operates over an unlicensed spectrum or a shared spectrum, the terminal device is required to perform listen before talk (LBT) to determine whether a channel is idle. If the channel is idle, the terminal device may access the channel for sidelink transmission, otherwise it cannot access the channel. In the SL-U system, the terminal device may perform the Type 1 channel access. If the terminal device determins that a channel is idle, the terminal device may perform sidelink transmission and initiate channel occupancy time (COT) sharing to share a COT with other terminal devices. If sidelink transmission resources or sidelink transmission opportunities of the other terminal devices are within a time range corresponding to the COT, the other terminal devices may perform the Type 2A (Type2A), Type 2B (Type2B) or Type 2C (Type2C) channel access. Which specific channel access type the other terminal devices should use for channel access is a technical problem that the present application aims to solve.

FIG. 12 is a schematic flowchart of a wireless communication method provided by an embodiment of the present application. The wireless communication method may be performed by a first terminal device.

As shon in FIG. 12, the method may include part or all of the following content.

In S 110, a first sidelink transmission opportunity for the first sidelink terminal device is obtained.

A time unit where the first side transmission opportunity is located is within a channel occupation time (COT) shared from a second terminal device.

In S120, a target channel access type to be used by the first terminal device is determined based on first information.

The first information includes at least one of the following information:
a first sidelink subcarrier spacing (SCS);
first indication information, where the first indication information is used to indicate a first channel access type and/or a first duration, the first duration results in a duration of a first gap between a start time of the first sidelink transmission opportunity and an end time of a second sidelink transmission opportunity to meet a duration needed for a channel access type, and the second sidelink transmission opportunity is a sidelink transmission opportunity prior to and adjacent to the first sidelink transmission opportunity;
a detection result directed to the second sidelink transmission opportunity;
the first gap; or
a channel type of a channel to be transmitted, where the channel to be transmitted is a channel to be transmitted by the first terminal device in the first sidelink transmission opportunity.

In this embodiment, the introduce of the first information allows the first terminal device to select an appropriate channel access type for channel access when using a COT shared from the second terminal device, thereby improving data transmission performance.

In some embodiments, S110 may include:
determining, by the first terminal device, the first sidelink transmission opportunity according to network configuration information or scheduling information; or
determining, by the first terminal device, a sidelink transmission opportunity selected by the first terminal device as the first sidelink transmission opportunity.

Illustratively, the first terminal device may obtain the first sidelink transmission opportunity according to the network configuration information or the scheduling information. For example, the first terminal device operates in the mode 1, a network device may dynamically allocate the first sidelink transmission opportunity to the first terminal device. Alternatively, the first terminal device may autonomously select the first sidelink transmission opportunity. For example, in the case where the first terminal device operates in the mode 2, the first terminal device may select the first sidelink transmission opportunity according to a monitoring result.

In some embodiments, the first sidelink transmission opportunity is used to transmit a PSCCH or a PSSCH.

Illustratively, the start time of the first sidelink transmission opportunity is a start time of a time unit where the first sidelink transmission opportunity is located, and the end time of the second sidelink transmission opportunity is any one of the following: an end time of the penultimate orthogonal frequency division multiplexing (OFDM) symbol in a time unit prior to the time unit where the first sidelink transmission opportunity is located that includes a sidelink transmission opportunity, or a start time of the last OFDM symbol in the time unit prior to the time unit where the first sidelink transmission opportunity is located that includes a sidelink transmission opportunity.

In an example where the time unit is a slot, if the first sidelink transmission opportunity is used to transmit a PSCCH and/or a PSSCH, the start time of the first sidelink transmission opportunity is a start time of a slot where the first sidelink transmission opportunity is located, and the end time of the second sidelink transmission opportunity is an end time of the penultimate OFDM symbol in a slot prior to the slot where the first sidelink transmission opportunity is located that includes a sidelink transmission opportunity (or a start time of the last OFDM symbol in a previous slot including a sidelink transmission opportunity).

Certainly, the time unit may alternatively be a radio frame, a subframe, an OFDM symbol or a time domain resource with aother length, which is not limited in the present application. Illustratively, the another length includes seconds, milliseconds, microseconds, etc.

Illustratively, if a previous time unit of the time unit where the first sidelink transmission opportunity is located includes PSFCH resources, the second sidelink transmission opportunity includes an opportunity in the previous time unit that is used to transmit a PSFCH.

Illustratively, if a previous time unit of the time unit where the first sidelink transmission opportunity is located does not include PSFCH resources, the second sidelink transmission includes opportunities in the previous time unit including a sidelink transmission opportunity that are used to transmit at least one of the following: a PSCCH, a PSSCH, or a S-SSB.

Illustratively, if the first sidelink transmission opportunity is used to transmit a PSFCH, the second sidelink transmission opportunity includes an opportunity in the time unit where the first sidelink transmission opportunity is located that is used to transmit a PSCCH and/or a PSSCH.

In some embodiments, the first sidelink transmission opportunity is used to transmit a PSFCH.

Illustratively, the start time of the first sidelink transmission opportunity is a start time of the first OFDM symbol of OFDM symbols included in the first sidelink transmission opportunity, and the end time of the second sidelink transmission opportunity is any one of the following: an end time of the second OFDM symbol prior to the first OFDM symbol of OFDM symbols included in the first sidelink transmission opportunity, or an end time of the first OFDM symbol prior to the first OFDM symbol of OFDM symbols included in the first sidelink transmission opportunity.

Illustratively, if the time unit where the first sidelink transmission opportunity is located is assumed to be slot n, and slot n does not include PSFCH resources, as shown in FIG. 9, the first sidelink transmission opportunity for the first terminal device in slot n includes OFDM symbol 0 to OFDM symbol 13 in slot n.

Illustratively, if the time unit where the first sidelink transmission opportunity is located is assumed to be slot n, slot n includes PSFCH resources, as shown in FIG. 10, and the channel to be transmitted by the first terminal device is a PSFCH, the first sidelink transmission opportunity for the first terminal device in slot n includes OFDM symbol 0 to OFDM symbol 9 in slot n; alternatively, if the channel to be transmitted by the first terminal device is a PSCCH/PSSCH, the first sidelink transmission opportunity for the first terminal device in slot n includes OFDM symbol 11 to OFDM symbol 12 in slot n.

In some embodiments, the time unit where the first sidelink transmission opportunity is located includes a time unit in which a side transmission of the first terminal device is located.

Illustratively, the time unit where the first sidelink transmission opportunity is located includes a time unit where the first sidelink transmission opportunity is located and a time unit before the sidelink transmission which is used to transmit cyclic prefix (CP) extension.

Illustratively, the time unit where the first sidelink transmission opportunity is located includes a time unit where the first sidelink transmission opportunity is located and a time unit after the sidelink transmission which is used to transmit data extension.

Illustratively, if the first terminal device transmits the CP extension before the sidelink transmission, the time unit where the first sidelink transmission opportunity is located includes a time unit where the first sidelink transmission opportunity is located and a time unit before the sidelink transmission which is used to transmit the CP extension.

Illustratively, if the first terminal device transmits the data extension after the sidelink transmission, the time unit where the first sidelink transmission opportunity is located includes a time unit where the first sidelink transmission opportunity is located and a time unit after the sidelink transmission which is used to transmit the data extension.

In some embodiments, the start time of the first sidelink transmission opportunity is related to the transmission of the CP extension.

Illustratively, if the first terminal device needs to transmit the CP extension before the sidelink transmission, the start time of the first sidelink transmission opportunity is a start time for transmitting the CP extension.

In some embodiments, the end time of the second sidelink transmission opportunity is related to the transmission of the data extension.

Illustratively, if data extension is needed after a sidelink transmission in the second sidelink transmission opportunity, the end time of the second sidelink transmission opportunity is an end time for transmitting the data extension.

In some embodiments, the first sidelink transmission opportunity and the second sidelink transmission opportunity are located in the same resource pool or different resource pools.

In some embodiments, the second sidelink transmission opportunity is used by the first terminal device, the second terminal device, or other terminal devices for performing sidelink transmission.

In some embodiments, the first sidelink transmission opportunity may be used to transmit a PSCCH, a PSSCH, a PSFCH, a S-SSB, or the like.

In some embodiments, the second sidelink transmission opportunity may be used to transmit a PSCCH, a PSSCH, a PSFCH, a S-SSB, or the like.

In some embodiments, the first sidelink transmission opportunity includes a group of sidelink transmissions performed by the first terminal device (i.e., including one or more sidelink transmissions). The group of sidelink transmissions is consecutive transmissions (that is, there are no gaps between the multiple sidelink transmissions), or there are gaps between the group of sidelink transmissions but the gaps are less than or equal to 16 µs. If a gap between two sidelink transmissions performed by the first terminal device is greater 16 µs, the two sidelink transmissions are considered to belong to two sidelink transmission opportunities.

In some embodiments, the second sidelink transmission opportunity includes a group of sidelink transmissions (i.e., including one or more sidelink transmissions) performed by the first terminal device, the second terminal device or other terminal devices. The group of sidelink transmissions is consecutive transmissions (that is, there are no gaps between the multiple sidelink transmissions), or there are gaps between the group of sidelink transmissions but the gaps are less than or equal to 16 µs. If a gap between two sidelink transmissions performed by the first terminal device, the second terminal device or other terminal devices is greater 16 µs, the two sidelink transmissions are considered to belong to two sidelink transmission opportunities.

In some embodiments, the first sidelink transmission opportunity is a sidelink resource used by the first terminal device for performing sidelink transmission.

In other words, the first sidelink transmission opportunity may be equivalent to or replaced by a first sidelink transmission resource or a first sidelink transmission time domain resource or other terms having the similar or same meanings, which is not limited in the present application.

In some embodiments, the second sidelink transmission opportunity is a sidelink resource used by the first terminal device, the second terminal device or other terminal devices for performing sidelink transmission.

In other words, the second sidelink transmission opportunity may be equivalent to or replaced by a second sidelink transmission resource or a second sidelink transmission time domain resource or other terms having the same meanings, which is not limited in the present application.

In some embodiments, the first sidelink SCS is a SCS corresponding to a carrier or bandwidth part (BWP) on which the first sidelink transmission opportunity is located.

In some embodiments, the method 100 may further include:
performing, by the first terminal device, channel access according to the target channel access type; and determining whether to perform a sidelink transmission in the first sidelink transmission according to a result of the channel access.

Illustratively, the first terminal device may perform a Type 2 channel access (e.g., a Type 2A, Type 2B, or Type 2C channel access), and determines whether to perform a sidelink transmission in the first sidelink transmission according to the result of such type of channel access.

In some embodiments, if the channel access succeeds, the first terminal device may perform a sidelink transmission by using the first sidelink transmission opportunity; if the channel access fails, the first terminal device may abandon the first sidelink transmission opportunity or the first terminal device may perform resource reselection, in other words, the failure of the channel access may trigger the first terminal device to perform resource reselection, or the failure of the channel access may be a trigger condition for the first terminal device to perform resource reselection.

Illustratively, the first terminal device may perform a Type 2 channel access (e.g., a Type 2A, Type 2B, or Type 2C channel access). If the Type 2 channel access succeeds, the first terminal device may perform a sidelink transmission by using the first sidelink transmission opportunity; and if the channel access fails, the first terminal device may abandon the first sidelink transmission opportunity or the first terminal device may perform resource reselection.

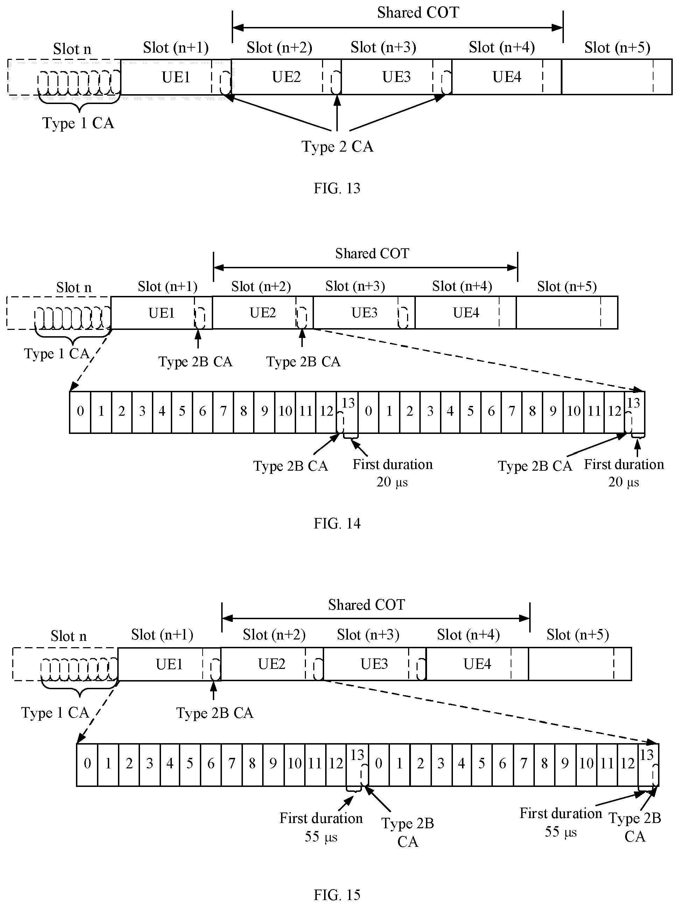

FIG. 13 is a schematic diagram illustrating a first terminal device performing a type 2 channel access provided by an embodiment of the prsent application.

As shown in FIG.13, the first sidelink transmission opportunity for UE1 is located in slot (n+1), and UE1 performs Type 1 channel access before slot (n+1). If the channel is idle, UE1 performs a sidelink transmission in slot (n+1) and shares COT with other terminals. The shared COT includes slot (n+2), slot (n+3) and slot (n+4). If sidelink transmission opportunities for UE2, UE3 and UE4 are located in slot (n+2), slot (n+3) and slot (n+4), respectively, UE2, UE3 and UE4 need to perform a Type 2 channel access before the slots in which their respective sidelink transmission resources are located.

For a slot used for sidelink transmission, as shown in FIG. 9 or FIG. 10, the slot used for sidelink transmission includes a guard period (GP). Since any terminal device does not perform sidelink transmission within a GP symbol, the first terminal device may perform channel access by using use the GP symbol. For example, if the channel to be transmitted is a PSCCH/PSSCH/S-SSB, the first terminal device may perform channel access by using the last symbol of a previous slot (i.e., the GP symbol). If the channel to be transmitted is a PSFCH, the first terminal device may perform channel access by using a symbol prior to the OFDM symbol where the PSFCH is located (i.e., the GP symbol priort to the PSFCH resource).

Considering that different sidelink subcarrier spacings correspond to different durations of one OFDM, and that durations needed by different Type 2 channel access are different, the present application introduces first information to determine the target channel access type to be used by the first terminal device.

For durations of one OFDM symbol corresponding to different sidelink subcarrier spacings, in an example where the subcarrier spacing is 15 kHz, when calculating a duration corresponding to one OFDM symbol, a system sampling rate is 30.72 MHz, and the effective data part of an OFDM symbol includes 2048 sampling points. If a cyclic prefix includes 144 sampling points, the duration of one OFDM symbol is 2192 sampling points. The duration corresponding to a sampling point is *T*ₛ = 1/(Δ*f*_{ref} · *N*_{f,ref} ), where *N*_{f,ref} = 2048. Thus, it may be determined that the duration corresponding to one OFDM symbol is 2192/30720000, which is about 71 µs.

It should be noted that a duration of one OFDM symbol in the embodiments of the present application includes a length corresponding to a cyclic prefix of the OFDM symbol.

Durations of one OFDM corresponding to different sidelink subcarrier spacings will be described below with reference to Table 3.

**Table 3 - Correspondence between sidelink subcarrier size and OFDM symbol duration**

| *µ* | Δ*f* = 2*^{µ}* · 15 [kHz] | Cyclic prefix type | Duration of one OFDM symbol |
|---|---|---|---|
| 0 | 15 | Normal | 71us |
| 1 | 30 | Normal | 36 µs |
| 2 | 60 | Normal | 18 µs |
| 2 | 60 | Extended | 21 µs |
| 3 | 120 | Normal | 9 µs |

As shown in Table 3, µ denotes a sidelink SCS parameter, and in a case of different sidelink SCSs, durations corresponding to one OFDM symbol are different. When a subcarrier is proportionally expanded, the corresponding duration of the OFDM symbols is proportionally shortened. Therefore, in a case of a normal CP, for a subcarrier spacing of 30 kHz, 60 kHz, or 120 kHz, the corresponding duration of one OFDM symbol may be 36 µs, 18 µs, or 9 µs, respectively. The SL-U system may support only some of the subcarrier spacings, such as 15 kHz, 30 Hz, and 60 kHz, which is not limited in the present application.

For different durations needed for Type 2 channel access, the Type 2 channel access may include Type 2A (Type2A) channel access, Type 2B (Type2B) channel access, or Type 2C (Type2C) channel access. The duration needed for Type 2A channel access is greater than or equal to 25 µs, the duration needed for Type 2B channel access is equal to 16 µs, and the duration needed for Type 2C channel access is less than or equal to 16 µs.

In some embodiments, the first terminal device may determine the target channel access type according to a first SCS.

In some embodiments, S120 may include:
determining, by the first terminal device, a channel access type corresponding to the first sidelink SCS as the target channel access type based on a first correspondence;
where the first correspondence includes a conrrespondence between at least one sidelink SCS and at least one channel access type, and the at least one sidelink SCS includes the first sidelink SCS.

Of course, the first correspondence may be implemented in the form of a table, or may be implemented in other forms, such as in the form of an array, which is not limited in the present application.

In some embodiments, the first sidelink SCS is 15 kHz or 30 kHz, and the target channel access type is Type 2A.

The duration of one OFDM symbol corresponding to a sidelink SCS of 15 kHz is 71 µs, and the duration of one OFDM symbol corresponding to 30 kHz is 36 µs, however, the duration needed for Type 2A channel access is greater than or equal to 25 µs (that is, Type 2A requires that a time gap (i.e., the first gap) between a start time of the current transmission opportunity and an end time of the previous transmission opportunity is greater than or equal to 25 µs). That is to say, in a case that the first terminal device performs channel access within a duration of one OFDM symbol (i.e., a GP symbol), both the duration of one OFDM symbol corresponding to a sidelink SCS of 15 kHz and the duration of one OFDM symbol corresponding to a sidelink SCS of 30 kHz can meet the duration needed for Type 2A channel access. Therefore, if the first sidelink SCS is 15 kHz or 30 kHz, the first terminal device may perform Type 2A channel access within one OFDM symbol (i.e., a GP symbol).

In some embodiments, the first sidelink SCS is 60 kHz, and the target channel access type is Type 2B or Type 2C.

The duration of one OFDM symbol corresponding to a sidelink SCS of 60 kHz is 18 µs, however, the duration needed for Type 2B channel access is equal to 16 µs (that is, Type 2B requires that a time gap (i.e., the first gap) between a start time of the current transmission opportunity and an end time of the previous transmission opportunity is equal to 16 µs), and the duration needed for Type 2C channel access is less than or equal to 16 µs (that is, Type 2C requires that a time gap (i.e., the first gap) between a start time of the current transmission opportunity and an end time of the previous transmission opportunity is less than or equal to 16 µs). That is to say, in a case that the first terminal device performs channel access within a duration of one OFDM symbol (i.e., a GP symbol), the duration of one OFDM symbol corresponding to a sidelink SCS of 60 kHz does not meet the duration needed for Type 2B or Type 2C channel access. Therefore, if the first sidelink SCS is 60 kHz or 30 kHz, the first terminal device may perform transmission of CP extension or data extension after Type 2B (or Type 2C) channel access performed within one OFDM symbol (i.e., a GP symbol) succeeds, so as to ensure that the first gap meet the duration needed for Type 2B (or Type 2C) channel access.

In some embodiments, the method 100 may further include:
determining, by the first terminal device, a second duration according to pre-configuration information or network configuration information; where a difference between a duration corresponding to one OFDM symbol and the second duration is less than or equal to 16 microseconds; and performing a transmission lasting the second duration before a start time of a sidelink transmission or after an end time of the sidelink transmission. Optionally, the transmission lasting the second duration may include at least one of the following: cyclic prefix (CP) extension, repetition of data on any OFDM symbol, data generated according to a redundant bit, or data generated according to a padding bit.

Illustratively, if the termianl device determines Type 2B as the target channel access type, the difference between the duration corresponding to one OFDM symbol and the second duration is equal to 16 microseconds, that is, after the Type 2B channel access performed by the first terminal device succeeds, the first terminal device performs a transmission lasting the second duration before a start time of a sidelink transmission or after an end time of a sidelink transmission.

Illustratively, if the termianl device determines Type 2C as the target channel access type, the difference between the duration corresponding to one OFDM symbol and the second duration is less than or equal to 16 microseconds, that is, after the Type 2C channel access performed by the first terminal device succeeds, the first terminal device performs a transmission lasting the second duration before a start time of a sidelink transmission or after an end time of a sidelink transmission.

In some embodiments, the first sidelink SCS is 120 kHz, and the channel access type is Type 2C.

The duration of one OFDM symbol corresponding to a sidelink SCS of 120 kHz is 9 µs, however, the duration needed for Type 2C channel access is less than or equal to 16 µs (that is, Type 2C requires that a time gap (i.e., the first gap) between a start time of the current transmission opportunity and an end time of the previous transmission opportunity is less than or equal to 16 µs). That is to say, in a case that the first terminal device performs channel access within a duration of one OFDM symbol (i.e., a GP symbol), the duration of one OFDM symbol corresponding to a sidelink SCS of 120 kHz can meet the duration needed for Type 2C channel access. Therefore, if the first sidelink SCS is 120 kHz, the first terminal device may perform Type 2C channel access within one OFDM symbol (i.e., a GP symbol).

In some embodiments, the first correspondence is predefined information, or the first correspondence is pre-configuration information, or the first correspondence is network configuration information, or the first correspondence is information configured by the second terminal device.

Illustratively, the first correspondence is predefined information. The first correspondence may refer to corresponding pre-stored codes, a table or other manners that may be used to indicate the first correspondence in devices (e.g., including the first terminal device, the second terminal device, other terminal devices or network devices), or may refer to the first correspondence defined in a protocol. Optionally, the "protocol" may refer to a standard protocol in the communication field, for example, may include an LTE protocol, an NR protocol, and a related protocol applied in a future communication system, which are not limited in the present application.

Certainly, the first correspondence may be information configured by the first terminal device.

Illustratively, the first correspondence is information included in sidelink BWP configuration information or resource pool configuration information.

Illustratively, if the first correspondence is the information configured by the second terminal device, the first correspondence may be carried in sidelink control information (SCI), a media access control (MAC) control element (CE), or PC5 radio resource control (RRC), or may be alternatively carried in COT sharing information. Optionally, the second terminal device may be the terminal device that initiates the COT sharing.

If the second terminal device that initiates the COT sharing is UE1, the first terminal device that is allowed to perform a sidelink transmission within a shared COT may be any one of UE2 to UE4. That is, the transmission opportunity for UE1 is located in slot (n+1), and if Tpye 1 channel access performed by UE1 before slot (n+1) succeeds, UE1 transmits a PSCCH/PSSCH by using the sidelink transmission opportunity in slot (n+1), and initiates the COT sharing. A time range of the COT sharing includes slot (n+2), slot (n+3), and slot (n+4).

In a case that the first sidelink SCS is 15 kHz or 30 kHz, a duration of one OFDM symbol may be 71 µs and 36 µs, respectively, that is, UE2 to UE4 may perform Type 2A channel access. The Type 2A channel access requires that a time gap between a start time of the current transmission opportunity and an end time of the previous transmission opportunity is greater than or equal to 25 µs. In other words, in a case that the first sidelink SCS is 15 kHz, if the transmission opportunity for UE2 is located in slot (n+2), UE2 may perform Type 2A channel access before slot (n+2); if the transmission opportunity for UE3 is located in slot (n+3), UE3 may perform Type 2A channel access before slot (n+3); and if the transmission opportunity for UE4 is located in slot (n+4), UE4 may perform Type 2A channel access before slot (n+4).

In a case that the first sidelink SCS is 60 kHz, a duration of one OFDM symbol may be 18 µs, that is, UE2 to UE4 may perform Type 2B or Type 2C channel access. The Type 2B channel access requires that a time gap between a start time of the current transmission opportunity and an end time of the previous transmission opportunity is equal to 16 µs, and the Type 2C channel access requires that the time gap between the start time of the current transmission opportunity and the end time of the previous transmission opportunity is less than or equal to 16 µs.

In a case that the first sidelink SCS is 60 kHz, as an implementation, if the transmission opportunity for UE2 is located in slot (n+2), UE2 may perform Type 2B channel access before slot (n+2); if the transmission opportunity for UE3 is located in slot (n+3), UE3 may perform Type 2B channel access before slot (n+3); and if the transmission opportunity for UE4 is located in slot (n+4), UE4 may perform Type 2B channel access before slot (n+4). Further, after the channel access succeeds, UE2 to UE4 perform a transmission lasting the second duration before a start time of a sidelink transmission or after an end time of a sidelink transmission, where a difference between a duration corresponding to one OFDM symbol and the second duration is equal to 16 microseconds.

In a case that the first sidelink SCS is 60 kHz, as an implementation, if the transmission opportunity for UE2 is located in slot (n+2), UE2 may perform Type 2C channel access before slot (n+2); if thetransmission opportunity for UE3 is located in slot (n+3), UE3 may perform Type 2C channel access before slot (n+3); and if the transmission opportunity for UE4 is located in slot (n+4), UE4 may perform Type 2C channel access before slot (n+4). Further, after the channel access succeeds, UE2 to UE4 perform a transmission lasting the second duration before a start time of a sidelink transmission or after an end time of a sidelink transmission, where a difference between a duration corresponding to one OFDM symbol and the second duration is less than or equal to 16 microseconds.

In a case that the first sidelink SCS is 120 kHz, a duration of one OFDM symbol may be 9 µs, that is, UE2 to UE4 may perform Type 2C channel access. The Type 2C channel access requires that a time gap between a start time of the current transmission opportunity and an end time of the previous transmission opportunity is less than or equal to 16 µs. In other words, in a case that the first sidelink SCS is 120 kHz, if the transmission opportunity for UE2 is located in slot (n+2), UE2 may perform Type 2C channel access before slot (n+2); if the transmission opportunity for UE3 is located in slot (n+3), UE3 may perform Type 2C channel access before slot (n+3); and if the transmission opportunity for UE4 is located in slot (n+4), UE4 may perform Type 2C channel access before slot (n+4).

In some embodiments, the first duration results in the duration of a first gap between a start time of the first sidelink transmission opportunity and an end time of a second sidelink transmission opportunity to meet a duration needed for Type 2A, Type 2B, or Type 2C.

In some embodiments, the first indication information is used to indicate a first channel access type, and S120 may include:
determining, by the first terminal device, the first channel access type as the target channel access type.

Illustratively, if the channel access type indicated by the first indication information is Type 2A, the first terminal device determines Type 2A as the target channel access type; if the channel access type indicated by the first indication information is Type 2B, the first terminal device determines Type 2B as the target channel access type; and if the channel access type indicated by the first indication information is Type 2C, the first terminal device determines Type 2C as the target channel access type.

In some embodiments, the method 100 may further include:
determining, by the first terminal device, the first duration according to a duration corresponding to one OFDM symbol and a duration required to meet the first channel access type.

Illustratively, the first terminal device determines a difference between the duration corresponding to one OFDM symbol and the duration required to meet the first channel access type as the first duration.

Illustratively, the first terminal device may determine the duration corresponding to one OFDM symbol according to the first sidelink SCS.

Illustratively, the first terminal device may determine the first duration according to the duration corresponding to one OFDM symbol and the duration needed for Type 2B (or Type 2C) channel access. For example, the time T corresponding to the first duration equals to the time gap T_{gap} needed for Type 2B (or Type 2C) subtracted from the time T_{OFDM} corresponding to one OFDM symbol, that is, T=T_{OFDM}-T_{gap}. T_{OFDM} is determined according to the first sidelink SCS, for example, T_{OFDM} may be determined based on Table 3 and the first sidelink SCS. In the case of Type 2B channel access, T_{gap} is equal to 16 µs (i.e., T_{gap}=16µs); and in the case of Type 2C channel access, T_{gap} is less than or equal to 16 µs (i.e., T_{gap} ≤ 16µs).

Illustratively, the first terminal device may perform the channel access based on the first channel access type indicated by the first indication information, and perform a sidelink transmission in the first sidelink transmission opportunity after the channel access succeeds. For example, if the first duration is 0, the first terminal device may perform the channel access based on the first channel access type indicated by the first indication information, and perform a sidelink transmission in the first sidelink transmission opportunity after the channel access succeeds.

Illustratively, the first terminal device may perform the channel access based on the first channel access type indicated by the first indication information, and after the channel access succeeds, the first terminal may perform a sidelink transmission in the first sidelink transmission opportunity and perform a transmission lasting the first duration before a start time of the sidelink transmission or after an end time of the sidelink transmission. For example, if the first duration is not 0, the first terminal device may perform the channel access based on the first channel access type indicated by the first indication information, and after the channel access succeeds, the first terminal device may perform a sidelink transmission in the first sidelink transmission opportunity and perform a transmission lasting the first duration before a start time of the sidelink transmission or after an end time of the sidelink transmission. Optionally, the transmission lasting the first duration may include at least one of the following: cyclic prefix (CP) extension, repetition of data on any OFDM symbol, data generated according to a redundant bit, or data generated according to a padding bit.

In some embodiments, the first indication information is used to indicate the first duration, and the method 100 may further include:
obtaining, by the first terminal device, a first difference, where the first terminal device is a difference between a duration corresponding to one OFDM symbol and the first duration; and determining the target channel access type according to the first difference;
where the first difference meets at least one of the following:
   greater than or equal to 25 µs;
   equal to 16 µs; or
   less than or equal to 16 µs.

Illustratively, the duration corresponding to one OFDM symbol may include a duration corresponding to a CP length.

In some embodiments, if the first difference is greater than or equal to 25 µs, the first terminal device determines the Type 2A channel access as the target channel access type; and/or if the first difference is less than 16 µs, the first terminal device determines the Type 2B channel access as the target channel access type; and/or if the first difference is less than or equal to 16 µs, the first terminal device determines the Type 2C channel access as the target channel access type.

Illustratively, if the first indication information is used to indicate the first duration, the first terminal device performs a transmission lasting the first duration after an end time of a sidelink transmission or before a start time of a sidelink transmission. Optionally, the transmission lasting the first duration may include at least one of the following: cyclic prefix (CP) extension, repetition of data on any OFDM symbol, data generated according to a redundant bit, or data generated according to a padding bit.

In some embodiments, there is no gap between the transmission lasting the first duration performed by the first terminal before the start time of the sidelink transmission and the sidelink transmission. In other words, the first terminal device successively performs the transmission lasting the first duration and the sidelink transmission.

In some embodiments, there is no gap between the transmission lasting the first duration performed by the first terminal after the end time of the sidelink transmission and the sidelink transmission. In other words, the first terminal device successively performs the sidelink transmission and the transmission lasting the first duration.

In some embodiments, the method 100 may further include:
obtaining, by the first terminal device, second indication information, where the second indication information is used to indicate performing a transmission lasting the first duration before a start time of a sidelink transmission or after an end time of the sidelink transmission; and determining, by the first terminal device according to the second indication information, to perform a transmission lasting the first duration before the start time of the sidelink transmission or after the end time of the sidelink transmission.

Illustratively, after the first terminal device successfully accesses a channel based on the target channel access type, the first terminal device performs a sidelink transmission in the first sidelink transmission opportunity, and performs, based on the second indication information, a transmission lasting the first duration before a start time of the sidelink transmission or after an end time of the sidelink transmission.

Illustratively, the first terminal device continuously performs the transmission lasting the first duration after an end time of a sidelink transmission, which compare with performing, by the first terminal device, a transmission lasting the first duration before a start time of a sidelink transmission, may avoid channel preemption caused by transmission performed in advance by the first terminal device.

In some embodiments, the second indication information is used to indicate performing a transmission lasting the first duration before a start time of a sidelink transmission. The method may further include:
if the channel access succeeds, performing, by the first terminal device, the transmission lasting the first duration and the sidelink transmission.

Illustratively, if the first terminal device performs the transmission lasting the first duration before the start time of the sidelink transmission, the first terminal device performs channel access immediately before the transmission lasting the first duration.

Illustratively, if the second indication information is used to indicate performing a transmission lasting the first duration before a start time of a sidelink transmission, the first terminal device performs channel access according to the target channel access type. If the channel access succeeds, the first terminal device performs the transmission lasting the first duration firstly and then the sidelink transmission.

In some embodiments, the second indication information is used to indicate performing a transmission lasting the first duration after an end time of a sidelink transmission. The method may further include:
performing, by the first terminal device, channel access according to the target channel access type; and if the channel access succeeds, performing, by the first terminal device, the sidelink transmission and the transmission lasting the first duration.

Illustratively, if the second indication information is used to indicate performing a transmission lasting the first duration after an end time of a sidelink transmission, the first terminal device performs channel access according to the target channel access type. If the channel access succeeds, the first terminal device performs the sidelink transmission firstly and then the transmission lasting the first duration.

In some embodiments, the transmission lasting the first duration includes data determined according to at least one of the following: CP extension, repetition of data on any OFDM symbol, a redundant bit, or a padding bit.

In some embodiments, the second indication information is predefined information, or the second indication information is pre-configuration information, or the second indication information is information configured by a network device, or the second indication information is information configured by the second terminal device.

Illustratively, the second indication information is predefined information. The second indication information may refer to corresponding pre-stored codes, a table or other manners that may be used to indicate the second indication information in devices (e.g., including the first terminal device, the second terminal device, other terminal devices or network devices), or may refer to the second indication information defined in a protocol. Optionally, the "protocol" may refer to a standard protocol in the communication field, for example, may include an LTE protocol, an NR protocol, and a related protocol applied in a future communication system, which are not limited in the present application.

Certainly, the second indication information may be information configured by the first terminal device.

Illustratively, the second indication information is information included in sidelink BWP configuration information or resource pool configuration information.

Illustratively, if the second indication information is the information configured by the second terminal device, the second indication information may be carried in sidelink control information (SCI), a media access control (MAC) control element (CE), or PC5 radio resource control (RRC), or may be alternatively carried in COT sharing information. Optionally, the second terminal device may be the terminal device that initiates the COT sharing.

In some embodiments, a priority class of a channel access type determined by the first terminal device based on the first indication information is higher than a priority class of a channel access type determined by the first terminal device based on the first sidelink SCS.

Illustratively, in a case that the first terminal device is capable of determining a channel access type based on the first sidelink SCS and determining another channel access type based on the first indication information, the first terminal device preferentially determines the channel access type base on the first indication information as the target channel access type.

Illustratively, if the first information includes both the first sidelink SCS and the first indication information, the first terminal device determines preferentially determines the target channel access type based on the first indicative information.

Illustratively, if the network configuration information includes not only the first correspondence but also the first indication information, the first terminal device may preferentially determine the channel access type base on the first indication information, that is, a priority class of a channel access type determined based on the first indication information is higher than a priority class of a channel access type determined based on the first correspondence.

In some embodiments, the first indication information is predefined information, or the first indication information is pre-configuration information, or the first indication information is information configured by a network device, or the first indication information is information configured by the second terminal device.

Illustratively, the first indication information is predefined information. The first indication information may refer to corresponding pre-stored codes, a table or other manners that may be used to indicate the first indication information in devices (e.g., including the first terminal device, the second terminal device, other terminal devices or network devices), or may refer to the first indication information defined in a protocol. Optionally, the "protocol" may refer to a standard protocol in the communication field, for example, may include an LTE protocol, an NR protocol, and a related protocol applied in a future communication system, which are not limited in the present application.

Certainly, the first indication information may be information configured by the first terminal device.

Illustratively, the first indication information is information included in sidelink BWP configuration information or resource pool configuration information.

Illustratively, if the first indication information is the information configured by the second terminal device, the first indication information may be carried in sidelink control information (SCI), a media access control (MAC) control element (CE), or PC5 radio resource control (RRC), or may be alternatively carried in COT sharing information. Optionally, the second terminal device may be the terminal device that initiates the COT sharing.

In some embodiments, if the first indication information indicates not only the first channel access type but also the first duration, the first indication information may include a plurality of indication information, and the first terminal device may obtain all of the plurality of indication information.

Illustratively, the first terminal device obtains the first indication information used to indicate a channel access type from a second terminal device, and the first terminal device obtains the first indication used to initiate a first duration from a network device.

FIG. 14 is an example diagram provided by embodiments of the present application, which illustrates the determination of the target channel access type performed by the first terminal device based on the first indication information.

As shown in FIG. 14, if the the second terminal device that initiates the COT sharing is UE1, the first terminal device that is allowed to perform a sidelink transmission within a shared COT may be any one of UE2 to UE4. That is, the transmission opportunity for UE1 is located in slot (n+1), and if Tpye 1 channel access performed by UE1 before slot (n+1) succeeds, UE1 transmits a PSCCH/PSSCH by using the sidelink transmission opportunity in slot (n+1), and initiates the COT sharing. A time range of the COT sharing includes slot (n+2), slot (n+3), and slot (n+4). Further, the transmission opportunity for UE2 is located in slot (n+2), the transmission opportunity for UE3 is located in slot (n+3), and the transmission opportunity for UE4 is located in slot (n+4). That is to say, UE2 to UE4 may perform Type 2 channel access before a sidelink transmission.

In an example where the first sidelink SCS is 30 kHz, a duration of one OFDM symbol is 36 µs. In a case that UE1 successfully accesses a channel through Type 1 channel access and initiates the COT sharing, related information of the shared COT carries indication information 1 that is used to indicate Type 2B channel access, that is, the other terminals that use the COT sharing need to perform Type 2B channel access. The Type 2B channel access requires that a time gap between a start time of the current transmission opportunity and an end time of the previous transmission opportunity is equal to 16 µs. Further, UE2 to UE4 may obtain indication information 2 according to network configuration information, which is used to indicate that a first duration (such as the duration used to transmit CP extension) is 20 µs, that is, the first duration equals to a difference obtained by subtracting a time gap needed for Type 2B channel access, i.e., 16 µs, from a duration of one OFDM symbol, i.e., 36 µs. That is to say, the aforementioned first indication information may include indication information 1 and indication information 2. Further, UE2 to UE4 may further obtain second indication information according to the network configuration information, which is used to indicate performing a transmission lasting the first duration before a sidelink transmission. In this case, after Type 2B channel access succeeds, UE2 to UE4 may perform a transmission lasting 20 µs before a start time of a sidelink transmission. Optionally, the transmission lasting 20 µs may be CP extension, or repetition of data on any OFDM symbol, such as repetition of data of sidelink transmission on the last OFDM symbol within the begining (or the last) 20 µs.

Illustratively, if the transmission opportunity for UE2 is located in slot (n+2), UE2 may perform Type 2B channel access before slot (n+2), and in a case that the channel access succeeds, transmit CP extension within 20 µs before a start time of slot (n+2). If the transmission opportunity for UE3 is located in slot (n+3), UE3 may perform Type 2B channel access before slot (n+3), and in a case that the channel access succeeds, transmit CP extension within 20 µs before a start time of slot (n+3). If the transmission opportunity for UE4 is located in slot (n+4), UE4 may perform Type 2B channel access before slot (n+4), and in a case that the channel access succeeds, transmit CP extension within 20 µs before a start time of slot (n+4).

Of course, FIG. 14 is only an example in the present application, and should not be interpreted as a limitation to the present application.

For example, in other alternative embodiments, the first sidelink SCS may be 15 kHz or 60 kHz.

In some embodiments, the first indication information may be used to indicate both the first channel access type and the first duration.

Illustratively, in a case that the first sidelink SCS is 15 kHz, 30 kHz, or 60 kHz, a duration of one OFDM symbol may be 71 µs, 36 µs, or 18 µs (in the case of a normal CP), respectively, the first terminal device may perform Type 2B or Type 2C channel access. The Type 2B channel access requires that a time gap between a start time of the current transmission opportunity and an end time of the previous transmission opportunity is equal to 16 µs, and the Type 2C channel access requires that the time gap between the start time of the current transmission opportunity and the end time of the previous transmission opportunity is less than or equal to 16 µs.

In this case, since a gap of a GP symbol is greater than the time gap needed for Type 2B or Type 2C, the first terminal device may obtain a first duration according to pre-configuration information or network configuration information when performing channel access in a GP symbol. The first duration is used to ensure that that the time gap between the start time of the current transmission opportunity and the end time of the previous transmission opportunity meets the duration needed forType 2B or Type 2C. For example, the resource pool configuration information or sidelink BWP configuration information includes information used to determine the first duration. Further, after the first terminal device obtains the first duration from the pre-configuration information or the network configuration information, the first terminal device may further obtain second indication information from the network configuration information. The second indication information is used to indicate the first terminal device to continuously perform a transmission lasting the first duration after an end time of a sidelink transmission, or used to indicate the first terminal device to perform a transmission lasting the first duration before a start time of a sidelink transmission. Optionally, the transmission lasting the first duration may include at least one of the following: cyclic prefix (CP) extension, repetition of data on any OFDM symbol, data generated according to a redundant bit, or data generated according to a padding bit.

FIG. 15 is an example diagram provided by embodiments of the present application, which illustrates the determination of the target channel access type performed by the first terminal device based on the first indication information.

As shown in FIG. 15, if the the second terminal device that initiates the COT sharing is UE1, the first terminal device that is allowed to perform a sidelink transmission within a shared COT may be any one of UE2 to UE4. That is, the transmission opportunity for UE1 is located in slot (n+1), and if Tpye 1 channel access performed by UE1 before slot (n+1) succeeds, UE1 transmits a PSCCH/PSSCH by using the sidelink transmission opportunity in slot (n+1), and initiates the COT sharing. A time range of the COT sharing includes slot (n+2), slot (n+3), and slot (n+4). Further, the transmission opportunity for UE2 is located in slot (n+2), the transmission opportunity for UE3 is located in slot (n+3), and the transmission opportunity for UE4 is located in slot (n+4). That is to say, UE2 to UE4 may perform Type 2 channel access before a sidelink transmission.

In an example where the first sidelink SCS is 15 kHz, a duration of one OFDM symbol is 71 µs. In a case that UE1 successfully accesses a channel through Type 1 channel access and initiates the COT sharing, related information of the shared COT carries indication information 1 that is used to indicate Type 2B channel access, that is, the other terminals that use the COT sharing need to perform Type 2B channel access. The Type 2B channel access requires that a time gap between a start time of the current transmission opportunity and an end time of the previous transmission opportunity is equal to 16 µs. Further, UE1 to UE4 may obtain indication information 2 according to network configuration information, which is used to indicate that a first duration (such as the duration used to transmit CP extension) is 55 µs, that is, the first duration equals to a difference obtained by subtracting a time gap needed for Type 2B channel access, i.e., 16 µs, from a duration of one OFDM symbol, i.e., 71 µs. That is to say, the aforementioned first indication information may include indication information 1 and indication information 2. Further, UE1 to UE4 may further obtain second indication information according to the network configuration information, which is used to indicate performing a transmission lasting the first duration after a sidelink transmission ends. In this case, after Type 1 channel access succeeds, UE1 may continuously perform a transmission lasting 55 µs after a sidelink transmission ends, and after Type 2B channel access succeeds, UE2 to UE4 may continuously perform a transmission lasting 55 µs after an end time of a sidelink transmission. Optionally, the transmission lasting 55 µs may be CP extension, or repetition of data on any OFDM symbol, such as repetition of data of sidelink transmission on the last OFDM symbol within the begining (or the last) 55 µs.

Illustratively, UE1 may perform Type 1 channel access before slot (n+1), and in a case that the channel access succeeds, UE1 transmits data extension lasting 55 µs after an end time of performing sidelink transmission in slot (n+1). If the transmission opportunity for UE2 is located in slot (n+2), UE2 may perform Type 2B channel access before slot (n+2), and in a case that the channel access succeeds, transmit data extension lasting 55 µs after an end time of a sidelink transmission in slot (n+2). If the transmission opportunity for UE3 is located in slot (n+3), UE3 may perform Type 2B channel access before slot (n+3), and in a case that the channel access succeeds, transmit data extension lasting 55 µs after an end time of a sidelink transmission in slot (n+3). If the transmission opportunity for UE4 is located in slot (n+4), UE4 may perform Type 2B channel access before slot (n+4), and in a case that the channel access succeeds, transmit data extension lasting 55 µs after an end time of a sidelink transmission in slot (n+4).

Of course, FIG. 15 is only an example in the present application, and should not be interpreted as a limitation to the present application.

For example, in other alternative embodiments, the first sidelink SCS may be 30 kHz or 60 kHz.

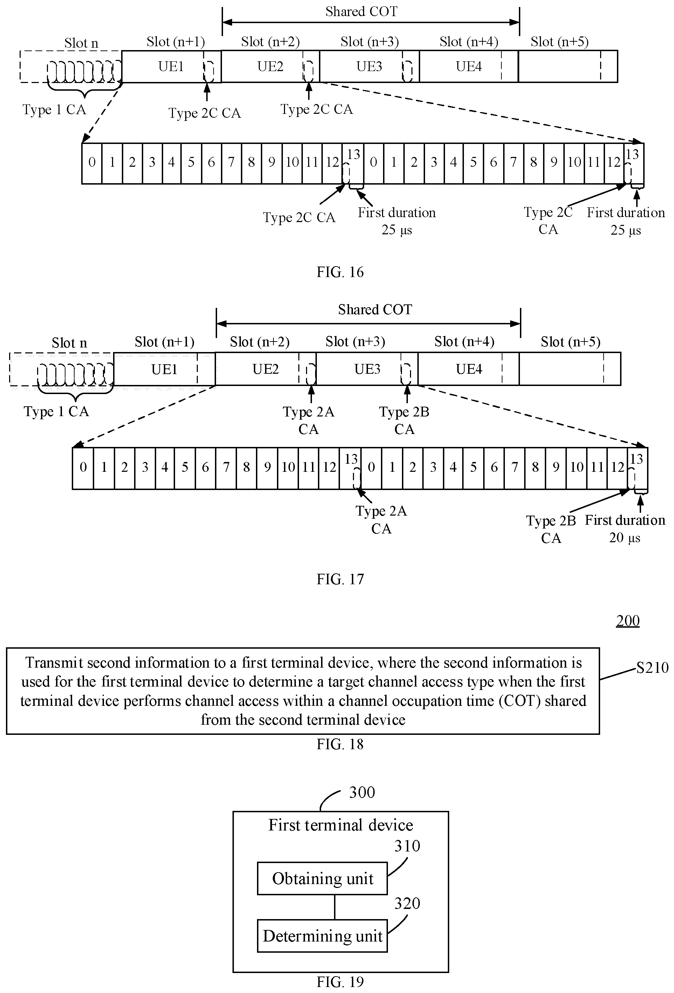

FIG. 16 is another example diagram provided by embodiments of the present application, which illustrates the determination of the target channel access type performed by the first terminal device based on the first indication information.

As shown in FIG. 16, if the the second terminal device that initiates the COT sharing is UE1, the first terminal device that is allowed to perform a sidelink transmission within a shared COT may be any one of UE2 to UE4. That is, the transmission opportunity for UE1 is located in slot (n+1), and if Tpye 1 channel access performed by UE1 before slot (n+1) succeeds, UE1 transmits a PSCCH/PSSCH by using the sidelink transmission opportunity in slot (n+1), and initiates the COT sharing. A time range of the COT sharing includes slot (n+2), slot (n+3), and slot (n+4). Further, the transmission opportunity for UE2 is located in slot (n+2), the transmission opportunity for UE3 is located in slot (n+3), and the transmission opportunity for UE4 is located in slot (n+4). That is to say, UE2 to UE4 may perform Type 2 channel access before a sidelink transmission.

In an example where the first sidelink SCS is 30 kHz, a duration of one OFDM symbol is 36 µs. In a case that UE1 successfully accesses a channel through Type 1 channel access and initiates the COT sharing, related information of the shared COT carries indication information 1 that is used to indicate Type 2C channel access, that is, the other terminals that use the COT sharing need to perform Type 2C channel access. The Type 2C channel access requires that a time gap between a start time of the current transmission opportunity and an end time of the previous transmission opportunity is less than or equal to 16 µs. Further, UE1 to UE4 may obtain indication information 2 according to network configuration information, which is used to indicate that a first duration (such as the duration used to transmit CP extension) is 55 µs, that is, the first duration is greater than or equal to a difference obtained by subtracting a maximum time gap needed for Type 2C channel access, i.e., 16 µs, from a duration of one OFDM symbol, i.e., 36 µs. Alternatively, in other words, a difference obtained by subtracting the first duration from a duration of one OFDM symbol, i.e., 36 µs, is less than or equal to the time gap needed for Type 2C channel access, i.e., 16 µs. That is to say, the aforementioned first indication information may include indication information 1 and indication information 2. Further, UE1 to UE4 may further obtain second indication information according to the network configuration information, which is used to indicate performing a transmission lasting the first duration before a sidelink transmission. In this case, since it is the Type 2C channel access, UE2 may directly access the channel for sidelink transmission without channel listening before slot (n+2), and UE2 to UE4 may perform a transmission lasting 25 µs before a start time of a sidelink transmission. Optionally, the transmission lasting 25 µs may be CP extension, or repetition of data on any OFDM symbol, such as repetition of data of sidelink transmission on the last OFDM symbol within the begining (or the last) 25 µs.

Illustratively, if the transmission opportunity for UE2 is located in slot (n+2), UE2 may transmit CP extension within 25 µs before a start time of slot (n+2), and then performs a sidelink transmission. If the transmission opportunity for UE3 is located in slot (n+3), UE3 may transmit CP extension within 25 µs before a start time of slot (n+3), and then performs a sidelink transmission. If the transmission opportunity for UE4 is located in slot (n+4), UE4 may transmit CP extension within 25 µs before a start time of slot (n+4), and then performs a sidelink transmission.

Of course, FIG. 16 is only an example in the present application, and should not be interpreted as a limitation to the present application.

For example, in other alternative embodiments, the first sidelink SCS may be 15 kHz or 60 kHz.

In some embodiments, the detection result includes at least one of the following:
whether SCI or a PSCCH is detected;
a sidelink reference signal received (receiving) power (RSRP) measurement value;
a sidelink received signal strength indication (RSSI) measurement value;
whether a PSFCH is detected; or
whether a primary synchronization signal, a secondary synchronization signal, or a physical sidelink broadcast channel (PSBCH) is detected.

Illustratively, the sidelink RSRP measurement value includes an RSRP measurement value based on PSCCH DMRS or an RSRP measurement based on PSSCH DMRS.

Illustratively, the sidelink RSRP measurement value includes an RSRP measurement value based on PSBCH DMRS.

In some embodiments, S120 may include:
if the detection result is used to indicate that the first terminal device has detected a sidelink transmission in the second sidelink transmission opportunity, determining, by the first terminal device, the target channel access type based on the first sidelink SCS and/or the first indication information; and/or if the detection result is used to indicate that the first terminal device has not detected a sidelink transmission in the second sidelink transmission opportunity, determining, by the first terminal device, a second channel access type as the target channel access type.

Illustratively, that the first terminal device has detected a sidelink transmission in the second sidelink transmission opportunity may refer to that the first terminal has detected at least one of the following in the second sidelink transmission opportunity: SCI, a PSCCH, a PSFCH, a primary synchronization signal, a secondary synchronization signal, or a PSBCH.

Illustratively, that the first terminal device has not detected a sidelink transmission in the second sidelink transmission opportunity may refer to that the first terminal has not detected at least one of the following in the second sidelink transmission opportunity: SCI, a PSCCH, a PSFCH, a primary synchronization signal, a secondary synchronization signal, or a PSBCH.

With reference to FIG. 9, the last symbol in the sidelink transmission of the first terminal device or the last symbol in a slot is a GP symbol, and no sidelink transmission exists in the GP symbol. As such, the first terminal device may perform channel access by using the GP symbol, and determine a corresponding channel access type according to a length of the GP symbol (depended on SCS size). If a sidelink transmission exists in a slot priort to the current sidelink transmission opportunity to be used, a time gap between the current sidelink transmission opportunity and the previous sidelink transmission opportunity is a duration corresponding to the GP symbol. If there is no sidelink transmission existing in a slot priort to the current sidelink transmission opportunity to be used, the time gap between the current sidelink transmission opportunity and the previous sidelink transmission opportunity is greater than the duration corresponding to one OFDM symbol, which may cause the channel access type to change. For example, if the sidelink subcarrier spacing is 120 kHz, a GP symbol is 9 µs, and a sidelink transmission exists in a slot prior to the current sidelink transmission opportunity, Type 2C channel access may be used. However, if no sidelink transmission exists in a previous slot, the time gap is greater than 25 µs, and in this case, Type 2A channel access is needed.

In some embodiments, S120 may include:
if the detection result includes a sidelink RSRP measurement value, and the sidelink RSRP measurement value is greater than or equal to a first threshold value, determining, by the first terminal device, the target channel access type according to the first sidelink SCS and/or the first indication information; and/or if the sidelink RSRP measurement value is less than the first threshold value, determining, by the first terminal device, a second channel access type as the target channel access type.

In some embodiments, the first threshold value is predefined information, or the first threshold value is pre-configuration information, or the first threshold value is information configured by a network device, or the first threshold value is information configured by the second terminal device.

Illustratively, the first threshold value is predefined information. The first threshold value may refer to corresponding pre-stored codes, a table or other manners that may be used to indicate the first threshold value in devices (e.g., including the first terminal device, the second terminal device, other terminal devices or network devices), or may refer to the first threshold value defined in a protocol. Optionally, the "protocol" may refer to a standard protocol in the communication field, for example, may include an LTE protocol, an NR protocol, and a related protocol applied in a future communication system, which are not limited in the present application.

Certainly, the first threshold value may be information configured by the first terminal device.

Illustratively, the first threshold value is information included in sidelink BWP configuration information or resource pool configuration information.

Illustratively, if the first threshold value is the information configured by the second terminal device, the first threshold value may be carried in sidelink control information (SCI), a media access control (MAC) control element (CE), or PC5 radio resource control (RRC), or may be alternatively carried in COT sharing information. Optionally, the second terminal device may be the terminal device that initiates the COT sharing.

In some embodiments, the first threshold value is a threshold value determined according to at least one of the following information: a sidelink priority, a channel access priority class, or a channel busy rate (CBR).

In some embodiments, S120 may include:
if the detection result includes a sidelink RSSI measurement value, and the sidelink RSSI measurement value is greater than or equal to a second threshold value, determining, by the first terminal device, the target channel access type according to the first sidelink SCS and/or the first indication information; and/or if the sidelink RSSI measurement value is less than the second threshold value, determining, by the first terminal device, a second channel access type as the target channel access type.

In some embodiments, the second threshold value is predefined information, or the second threshold value is pre-configuration information, or the second threshold value is information configured by a network device, or the second threshold value is information configured by the second terminal device.

Illustratively, the second threshold value is predefined information. The second threshold value may refer to corresponding pre-stored codes, a table or other manners that may be used to indicate the second threshold value in devices (e.g., including the first terminal device, the second terminal device, other terminal devices or network devices), or may refer to the second threshold value defined in a protocol. Optionally, the "protocol" may refer to a standard protocol in the communication field, for example, may include an LTE protocol, an NR protocol, and a related protocol applied in a future communication system, which are not limited in the present application.

Certainly, the second threshold value may be information configured by the first terminal device.

Illustratively, the second threshold value is information included in sidelink BWP configuration information or resource pool configuration information.

Illustratively, if the second threshold value is the information configured by the second terminal device, the fifth threshold value may be carried in sidelink control information (SCI), a media access control (MAC) control element (CE), or PC5 radio resource control (RRC), or may be alternatively carried in COT sharing information. Optionally, the second terminal device may be the terminal device that initiates the COT sharing.

In some embodiments, the second threshold value is a threshold value determined according to at least one of the following information: a sidelink priority, a channel access priority class, or a CBR.

In some embodiments, S120 may include:
if the detection result includes that SCI or a PSCCH is detected, determining, by the first terminal device, the target channel access type based on the first sidelink SCS and/or the first indication information; and/or if the detection result includes that no SCI or PSCCH is detected, determining, by the first terminal device, a second channel access type as the target channel access type; and/or if the detection result includes that SCI or a PSCCH is detected, and a sidelink RSRP measurement value is greater than or equal to a third threshold value, determining, by the first terminal device, the target channel access type based on the first sidelink SCS and/or the first indication information; and/or if the detection result includes that SCI or a PSCCH is detected, and the sidelink RSRP measurement value is less than the third threshold value, determining, by the first terminal device, the second channel access type as the target channel access type; where the sidelink RSRP measurement value includes an RSRP measurement value based on PSCCH DMRS or an RSRP measurement based on PSSCH DMRS.

In some embodiments, the SCI includes a 1st stage SCI or a 2nd stage SCI.

In some embodiments, that SCI is detected includes that cyclic redundancy check (CRC) on the SCI succeeds.

In some embodiments, that a PSCCH is detected includes that CRC on SCI carried in the PSCCH succeeds.

In some embodiments, the third threshold value is predefined information, or the third threshold value is pre-configuration information, or the third threshold value is information configured by a network device, or the third threshold value is information configured by the second terminal device.

Illustratively, the third threshold value is predefined information. The third threshold value may refer to corresponding pre-stored codes, a table or other manners that may be used to indicate the third threshold value in devices (e.g., including the first terminal device, the second terminal device, other terminal devices or network devices), or may refer to the third threshold value defined in a protocol. Optionally, the "protocol" may refer to a standard protocol in the communication field, for example, may include an LTE protocol, an NR protocol, and a related protocol applied in a future communication system, which are not limited in the present application.

Certainly, the third threshold value may be information configured by the first terminal device.

Illustratively, the third threshold value is information included in sidelink BWP configuration information or resource pool configuration information.

Illustratively, if the third threshold value is the information configured by the second terminal device, the third threshold value may be carried in sidelink control information (SCI), a media access control (MAC) control element (CE), or PC5 radio resource control (RRC), or may be alternatively carried in COT sharing information. Optionally, the second terminal device may be the terminal device that initiates the COT sharing.

In some embodiments, the third threshold value is a threshold value determined according to at least one of the following information: a sidelink priority, a channel access priority class, or a CBR.

In some embodiments, S120 may include.
if if the detection result includes that a primary synchronization signal, secondary synchronization signal or PSBCH is detected, determining, by the first terminal device, the target channel access type based on the first sidelink SCS and/or the first indication information; and/or if the detection result includes that no primary synchronization signal, secondary synchronization signal or PSBCH is detected, determining, by the first terminal device, a second channel access type as the target channel access type; and/or if the detection result includes that a primary synchronization signal, secondary synchronization signal or PSBCH is detected, and a sidelink RSRP measurement value is greater than or equal to a fourth threshold value, determining, by the first terminal device, the target channel access type based on the first sidelink SCS and/or the first indication information; and/or if the detection result includes that a primary synchronization signal, secondary synchronization signal or PSBCH is detected, and the sidelink RSRP measurement value is less than the fourth threshold value, determining, by the first terminal device, the second channel access type as the target channel access type; where the sidelink RSRP measurement value includes an RSRP measurement value based on PSBCH DMRS.

In some embodiments, the fourth threshold value is predefined information, or the fourth threshold value is pre-configuration information, or the fourth threshold value is information configured by a network device, or the fourth threshold value is information configured by the second terminal device.

Illustratively, the fourth threshold value is predefined information. The fourth threshold value may refer to corresponding pre-stored codes, a table or other manners that may be used to indicate the fourth threshold value in devices (e.g., including the first terminal device, the second terminal device, other terminal devices or network devices), or may refer to the fourth threshold value defined in a protocol. Optionally, the "protocol" may refer to a standard protocol in the communication field, for example, may include an LTE protocol, an NR protocol, and a related protocol applied in a future communication system, which are not limited in the present application.

Certainly, the fourth threshold value may be information configured by the first terminal device.

Illustratively, the fourth threshold value is information included in sidelink BWP configuration information or resource pool configuration information.

Illustratively, if the fourth threshold value is the information configured by the second terminal device, the fourth threshold value may be carried in sidelink control information (SCI), a media access control (MAC) control element (CE), or PC5 radio resource control (RRC), or may be alternatively carried in COT sharing information. Optionally, the second terminal device may be the terminal device that initiates the COT sharing.

In some embodiments, the fourth threshold value is a threshold value determined according to at least one of the following information: a sidelink priority, a channel access priority class, or a CBR.

In some embodiments, S120 may include:
if the detection result includes that a PSFCH is detected, determining, by the first terminal device, the target channel access type according to the first sidelink SCS and/or the first indication information; and/or if the detection result includes that a PSFCH is not detected, determining, by the first terminal device, a second channel access type as the target channel access type.

In some embodiments, the second channel access type includes the Type 2A channel access type.

In some embodiments, the second channel access type is determined according to predefined information in a protocol, pre-configuration information, network configuration information, or configuration information of the second terminal device.

Illustratively, the second channel access type is predefined information. The second channel access type may refer to corresponding pre-stored codes, a table or other manners that may be used to indicate the second channel access type in devices (e.g., including the first terminal device, the second terminal device, other terminal devices or network devices), or may refer to the second channel access type defined in a protocol. Optionally, the "protocol" may refer to a standard protocol in the communication field, for example, may include an LTE protocol, an NR protocol, and a related protocol applied in a future communication system, which are not limited in the present application.

Certainly, the second channel access type may be information configured by the first terminal device.

Illustratively, the second channel access type is information included in sidelink BWP configuration information or resource pool configuration information.

Illustratively, if the second channel access type is the information configured by the second terminal device, the second channel access type may be carried in sidelink control information (SCI), a media access control (MAC) control element (CE), or PC5 radio resource control (RRC), or may be alternatively carried in COT sharing information. Optionally, the second terminal device may be the terminal device that initiates the COT sharing.

FIG. 17 is an example diagram provided by embodiments of the present application, which illustrates the determination of the target channel access type performed by the first terminal device based on the detection result.

As shown in FIG. 17, if the the second terminal device that initiates the COT sharing is UE1, the first terminal device that is allowed to perform a sidelink transmission within a shared COT may be any one of UE2 to UE4. That is, the transmission opportunity for UE1 is located in slot (n+1), and if Tpye 1 channel access performed by UE1 before slot (n+1) succeeds, UE1 transmits a PSCCH/PSSCH by using the sidelink transmission opportunity in slot (n+1), and initiates the COT sharing. A time range of the COT sharing includes slot (n+2), slot (n+3), and slot (n+4). Further, the transmission opportunity for UE2 is located in slot (n+2), the transmission opportunity for UE3 is located in slot (n+3), and the transmission opportunity for UE4 is located in slot (n+4). That is to say, UE2 to UE4 may perform Type 2 channel access before a sidelink transmission.

In an example where the first sidelink SCS is 30 kHz, a duration of one OFDM symbol is 36 µs. In a case that UE1 successfully accesses a channel through Type 1 channel access and initiates the COT sharing, related information of the shared COT carries indication information 1 that is used to indicate Type 2B channel access, that is, the other terminals that use the COT sharing need to perform Type 2B channel access. The Type 2B channel access requires that a time gap between a start time of the current transmission opportunity and an end time of the previous transmission opportunity is equal to 16 µs. Further, UE1 to UE4 may obtain indication information 2 according to network configuration information, which is used to indicate that a first duration (such as the duration used to transmit CP extension) is 20 µs, that is, the first duration equals to a difference obtained by subtracting a time gap needed for Type 2B channel access, i.e., 16 µs, from a duration of one OFDM symbol, i.e., 36 µs. That is to say, the aforementioned first indication information may include indication information 1 and indication information 2. Further, UE2 to UE4 may further obtain second indication information according to the network configuration information, which is used to indicate performing a transmission lasting the first duration before a sidelink transmission. In this case, after Type 2B channel access succeeds, UE2 to UE4 may perform a transmission lasting 20 µs before a start time of a sidelink transmission. Optionally, the transmission lasting 20 µs may be CP extension, or repetition of data on any OFDM symbol, such as repetition of data of sidelink transmission on the last OFDM symbol within the begining (or the last) 20 µs.

For UE3, if the transmission opportunity for UE3 is located in slot (n+3), UE3 performs a detection on slot (n+2) before a sidelink transmission and obtains a detection result, and the detection result may include detecting PSCCH and measuring RSRP of PSCCH DMRS. If UE3 does not detect a PSCCH in slot (n+2), it is determined that no terminal performs sidelink transmission in slot (n+2). In this case, since a gap between the sidelink transmission in slot (n+3) and the sidelink transmission in slot (n+1) is greater than 25 µs, UE3 may determine to perform Type 2A channel access before slot (n+3), and after the performed Type 2A channel access succeeds, UE3 transmits CP extension 20 µs earlier than slot (n+3).

For UE4, if the transmission opportunity for UE4 is located in slot (n+4), UE4 performs a detection on slot (n+3) before a sidelink transmission, and a PSCCH transmitted by UE3 may be detected, and further based on that a RSRP obtained by measuring PSCCH DMRS is greater than the aforementioned third threshold value, it may be determined that there is a sidelink transmission existing in slot (n+3). In this case, UE4 may perform Type 2B channel access before slot (n+4), and after the channel access succeeds, UE4 transmits CP extension 20 µs earlier than slot (n+4).

In some embodiments, the method 100 may further include.
determining, by the first terminal device, whether to determine the target channel access type according to the detection result.

In some embodiments, the first terminal device obtains third indication information, and if the third indication information is used to indicate determining the target channel access type based on the detection result, the first terminal device determines to determine the target channel access type based on the detection result.

Illustratively, if the first terminal device is capable of obtaining the third indication information, and the third indication information is used to indicate determining the target channel access type based on the detection result, the first terminal device determines to determine the target channel access type based on the detection result.

Illustratively, if the first terminal device is capable of obtaining the third indication information, and a value of the third indication information is a first value, the first terminal device determines to determine the target channel access type based on the detection result. Optionally, the first value may be 1, TRUE, or enable.

Illustratively, if the first terminal device is not capable of receiving the third indication information, the first terminal device determines not to determine the target channel access type based on the detection result.

Illustratively, if the first terminal device is capable of obtaining the third indication information, and the value of the third indication information is a second value, the first terminal device determines not to determine the target channel access type based on the detection result. Optionally, the second value may be 0, FALSE, or disable.

Certainly, the first value and the second value may be other values or values with other meanings, which is not limited in the present application.

In some embodiments, if the first terminal device determines not to determine the target channel access type based on the detection result, the termianl device may determine the target channel access type based on at least one of the following: the first sidelink SCS, the first indication information, the first gap, or the type of the channel to be transmitted.

In some embodiments, the third indication information is predefined information, or the third indication information is pre-configuration information, or the third indication information is information configured by a network device, or the third indication information is information configured by the second terminal device.

Illustratively, the third indication information is predefined information. The third indication information may refer to corresponding pre-stored codes, a table or other manners that may be used to indicate the third indication information in devices (e.g., including the first terminal device, the second terminal device, other terminal devices or network devices), or may refer to the third indication information defined in a protocol. Optionally, the "protocol" may refer to a standard protocol in the communication field, for example, may include an LTE protocol, an NR protocol, and a related protocol applied in a future communication system, which are not limited in the present application.

Certainly, the third indication information may be information configured by the first terminal device.

Illustratively, the third indication information is information included in sidelink BWP configuration information or resource pool configuration information.

Illustratively, if the third indication information is the information configured by the second terminal device, the third indication information may be carried in sidelink control information (SCI), a media access control (MAC) control element (CE), or PC5 radio resource control (RRC), or may be alternatively carried in COT sharing information. Optionally, the second terminal device may be the terminal device that initiates the COT sharing.

In some embodiments, S120 may include:
if the first interval is greater than or equal to a fifth threshold value, determine the Type 2A channle access type as the target channel access type.

Illustratively, if the first gap is equal to or greater than 25 µs, the first terminal device may perform Type 2A channel access before a sidelink transmission; if the first gap is less than or equal to 16 µs, the first terminal device may perform Type 2C channel access before a sidelink transmission; and if the first gap is equal to 16 µs, the first terminal device may perform Type 2B channel access before a sidelink transmission.

In some embodiments, the fifth threshold value is predefined information, or the fifth threshold value is pre-configuration information, the fifth threshold value is information configured by a network device, or the fifth threshold value is information configured by the second terminal device.

Illustratively, the fifth threshold value is predefined information. The fifth threshold value may refer to corresponding pre-stored codes, a table or other manners that may be used to indicate the fifth threshold value in devices (e.g., including the first terminal device, the second terminal device, other terminal devices or network devices), or may refer to the fifth threshold value defined in a protocol. Optionally, the "protocol" may refer to a standard protocol in the communication field, for example, may include an LTE protocol, an NR protocol, and a related protocol applied in a future communication system, which are not limited in the present application.

Certainly, the fifth threshold value may be information configured by the first terminal device.

Illustratively, the fifth threshold value is information included in sidelink BWP configuration information or resource pool configuration information.

Illustratively, if the fifth threshold value is the information configured by the second terminal device, the fifth threshold value may be carried in sidelink control information (SCI), a media access control (MAC) control element (CE), or PC5 radio resource control (RRC), or may be alternatively carried in COT sharing information. Optionally, the second terminal device may be the terminal device that initiates the COT sharing.

In some embodiments, the first gap is determined according to resource pool configuration information.

Illustratively, the first terminal device may determine, according to the resource pool configuration information, whether the first sidelink transmission opportunity and the second sidelink transmission opportunity are located in adjacent time units, that is, whether any time unit that is not used for sidelink transmission exists in the first gap. If a time unit that is not used for sidelink transmission exists in the first gap, the first gap should be greater than 25 µs. In this case, the first terminal device may perform Type 2A channel access.

In some embodiments, the type of the channel to be transmitted includes at least one of the following: a PSCCH, a PSSCH, a PSFCH, or a S-SSB.

In some embodiments, S120 may include:
if the channel type of the channel to be transmitted includes at least one of a PSFCH or a S-SSB, determining, by the first terminal device, a third channle access type as the target channel access type, or directly transmit the channel to be transmitted without performing channel access.

Illustratively, if the channel type of the channel to be transmitted includes at least one of a PSFCH or a S-SSB, the first terminal device performs channel access based on the third channel access type. The first terminal device performs a sidelink transmission by using the first sidelink transmission opportunity after the channel access succeeds. If the channel access fails, the first terminal device may abandon the first sidelink transmission opportunity or the first terminal device may perform resource reselection.

In some embodiments, the third channel access type includes the Type 2C channel access type.

In some embodiments, the third channel access type includes the Type 2A channel access type.

In some embodiments, the third channel access type is determined according to predefined information, pre-configuration information, information configured by a network device, or information configured by the second terminal device.

Illustratively, the third channel access type is predefined information. The third channel access type may refer to corresponding pre-stored codes, a table or other manners that may be used to indicate the third channel access type in devices (e.g., including the first terminal device, the second terminal device, other terminal devices or network devices), or may refer to the third channel access type defined in a protocol. Optionally, the "protocol" may refer to a standard protocol in the communication field, for example, may include an LTE protocol, an NR protocol, and a related protocol applied in a future communication system, which are not limited in the present application.

Certainly, the third channel access type may be information configured by the first terminal device.

Illustratively, the third channel access type is information included in sidelink BWP configuration information or resource pool configuration information.

Illustratively, if the third channel access type is the information configured by the second terminal device, the third channel access type may be carried in sidelink control information (SCI), a media access control (MAC) control element (CE), or PC5 radio resource control (RRC), or may be alternatively carried in COT sharing information. Optionally, the second terminal device may be the terminal device that initiates the COT sharing.

In some embodiments, the method 100 may further include:
receiving COT sharing information transmitted by the second terminal device.

In some embodiments, the COT sharing information includes at least one of the following:
a channel access priority class;
a time offset, used to determine a start time of the shared COT;
duration information, used to indicate a shared COT duration or a remaining COT duration;
identification information, used to determine a terminal device that is allowed to use the shared COT; or
resource block set information or channel information for performing channel access by the second terminal device.

Illustratively, the identification information may be an identifier of the terminal device, a group identifier of the terminal device, or an identifier of the terminal device determined according to service type.

Illustratively, if the second terminal device needs to perform sidelink transmission on a plurality of channels, the second terminal device needs to perform channel access on all the plurality of channels. Only after the channel access on all of the channels succeeds, can the second terminal device perform channel access on the plurality of channels. Therefore, the second terminal device may indicate in the COT sharing information that an initiated COT is information of the plurality of channels on which the channel access is performed.

Illustratively, the COT sharing information is carried in SCI, MAC CE, or PC5-RRC signaling.

In some embodiments, the method 100 may further include:
determine whether it is allowed to use the shared COT according to at least one of the following:
a channel access priority class;
a priority of sidelink data or sidelink channel to be transmitted by the first terminal device;
identification information of the first terminal device;
group identification information of a group in which the first terminal device is located;
type information of a service to be transmitted by the first terminal device;
channel information or resource block set information corresponding to the first sidelink transmission opportunity; or
whether the second terminal device is a target receiving terminal of the sidelink data or sidelink channel to be transmitted by the first terminal device.

Illustratively, if a value of a channel access priority class corresponding to sidelink data or sidelink channel to be transmitted by the first terminal device is equal to or less than a value of a channel access priority class of the second terminal device that initiates a COT, the first terminal device is allowed to use the shared COT; otherwise, the first terminal device is not allowed to use the shared COT.

Illustratively, if a value of a sidelink priority of the first terminal device is equal to or less than a value of a sidelink priority of the second terminal device that initiates a COT, the first terminal device is allowed to use the shared COT; otherwise, the first terminal device is not allowed to use the shared COT.

Illustratively, a channel set corresponding to the first terminal device in the first sidelink transmission opportunity is a subset of a channel set of the second terminal device that initiates a COT or is the channel set of the second terminal device, the first terminal device is allowed to use the shared COT; otherwise, the first terminal device is not allowed to use the shared COT.

Illustratively, if the second terminal device is a target receiving terminal of the sidelink data or sidelink channel to be transmitted by the first terminal device, the first terminal device is allowed to use the shared COT; otherwise, the first terminal device is not allowed to use the shared COT.

With reference to the accompanying diagrams, the preferred implementations of the present application are described in detail in the above. However, the present application is not limited to the spcific details in the above implementations. Within the technical concept of the present application, the technical solutions in the present application may have various simple variations, and those simple variations all fall within the protection scope of the present application. For example, the various specific technical features described in the above specific embodiments may be combined with each other in any suitable manner without contradiction. In order to avoid unnecessary repetition, the various possible combinations will not be described in the present application. In another example, the various implementations of the present application may be arbitrarily combined, as long as they do not violate the concept of the present application, which should also be considered as the content disclosed in the present application.

It should be understood that in each embodiment of the present application, the sequence numbers of the above-mentioned processes do not mean the order of execution, and the order of execution of each process should be determined by its functions and internal logic, and should not constitute any limitation on the implementing process of the embodiment of the present application. Furthermore, in the embodiments of the present application, terms such as "downlink" and "uplink" are intended to indicate transmission directions of signals or data. The term "downlink" is intended to indicate that a transmission direction of signals or data is a first direction of transmitting signals or data from a station to a user equipment in a cell, and the term "uplink" is intended to indicate that a transmission direction of signals or data is a second direction of transmitting signals or data from a user equipment in a cell to a station. For example, "downlink signal" indicates that a transmission direction of the signal is the first direction. In addition, in the embodiments of the present application, the term "and/or" refers to an association relationship describing associated objects, which indicates that there may be three kinds of relationships. Specifically, "A and/or B" may indicate three cases that: A exists alone, both A and B exist, and B exists alone. In addition, the character "/" herein generally indicates that related objects before and after the character "/" are in an "or" relationship.

In the above, with reference to FIGS. 13 to 17, a wireless communication method provided according to the embodiment of the present application is described in detail from the perspective of the first terminal device. In the following, with reference to FIG. 18, the wireless communication method provided according to the embodiment of the present application will be described from the perspective of the second terminal device or network device.

FIG. 18 is a schematic flowchart of a wireless communication method 200 provided by an embodiment of the present application. The method may be performed by a second terminal device that transmits a shared COT, or may be performed by a network device.

As shown in FIG. 18, the method may include:
S210: transmitting second information to a first terminal device, where the second information is used for the first terminal device to determine a target channel access type when the first terminal device performs channel access within a channel occupation time (COT) shared from the second terminal device.

In some embodiments, the second information includes at least one of the following:
a first correspondence, where the first correspondence includes a conrrespondence between at least one sidelink SCS and at least one channel access type;
first indication information, where the first indication information is used to indicate a first channel access type and/or a first duration;
second indication information, where the second indication information is used to indicate performing a transmission lasting the first duration before a start time of a sidelink transmission or after an end time of the sidelink transmission;
third indication information, where the third indication information is used to determine the target channel access type according to a detection result of the first terminal device;
at least one threshold value corresponding to the detection result; or
a third channel access type.

In some embodiments, the transmission lasting the first duration includes data determined according to at least one of the following: cyclic prefix (CP) extension, repetition of data on any orthogonal frequency division multiplexing (OFDM) symbol, a redundant bit, or a padding bit.

In some embodiments, the method is applied to the second terminal device, and the method further includes:
transmitting COT sharing information to the first terminal device.

In some embodiments, the COT sharing information includes at least one of the following:
a channel access priority class;
a time offset, used to determine a start time of the shared COT;
duration information, used to indicate a shared COT duration or a remaining COT duration;
sharing identification information, used to determine a terminal device that is allowed to use the shared COT; or
resource block set information or channel information for performing channel access by the second terminal device.

It should be understood that steps in the wireless communication method 200 may be referred to the corresponding steps in the wireless communication method 100, which will not be repeated here for brevity.

The method embodiments of the present application are described in the above with reference to FIGS. 1 to 18, and the device embodiments of the present application will be described below with reference to FIGS. 19 to 22.

FIG. 19 is a schematic block diagram of a first terminal device 300 in an embodiment of the present application.

As shown in FIG. 19, the first terminal device 300 may include:
an obtaining unit 310, configured to obtain a first sidelink transmission opportunity for the first sidelink terminal device;
where a time unit where the first side transmission opportunity is located is within a channel occupation time (COT) shared from a second terminal device; and
a determining unit 320, configured to determine a target channel access type to be used by the first terminal device based on first information;
where the first information includes at least one of the following information:
   a first sidelink subcarrier spacing (SCS);
   first indication information, where the first indication information is used to indicate a first channel access type and/or a first duration, the first duration results in a duration of a first gap between a start time of the first sidelink transmission opportunity and an end time of a second sidelink transmission opportunity to meet a duration needed for a channel access type, and the second sidelink transmission opportunity is a sidelink transmission opportunity prior to and adjacent to the first sidelink transmission opportunity;
   a detection result directed to the second sidelink transmission opportunity;
   the first gap; or
   a channel type of a channel to be transmitted, where the channel to be transmitted is a channel to be transmitted by the first terminal device in the first sidelink transmission opportunity.

In some embodiments, the determining unit 320 is specifically configured to:
determine, based on a first correspondence, a channel access type corresponding to the first sidelink SCS as the target channel access type;
where the first correspondence includes a conrrespondence between at least one sidelink SCS and at least one channel access type, and the at least one sidelink SCS includes the first sidelink SCS.

In some embodiments, the first sidelink SCS is 15 kHz or 30 kHz, and the target channel access type is Type 2A.

In some embodiments, the first sidelink SCS is 60 kHz, and the target channel access type is Type 2B or Type 2C.

In some embodiments, the determining unit 320 is further configured to:
determine a second duration according to pre-configuration information or network configuration information;
where a difference between a duration corresponding to one orthogonal frequency division multiplexing (OFDM) symbol and the second duration is less than or equal to 16 microseconds;
perform a transmission lasting the second duration before a start time of a sidelink transmission or after an end time of the sidelink transmission.

In some embodiments, the first sidelink SCS is 120 kHz, and the channel access type is Type 2C.

In some embodiments, the first correspondence is predefined information, or the first correspondence is pre-configuration information, or the first correspondence is network configuration information, or the first correspondence is information configured by the second terminal device.

In some embodiments, the first indication information is used to indicate a first channel access type;
the determining unit 320 is specifically configured to:
determine the first channel access type as the target channel access type.

In some embodiments, the determining unit 320 is further configured to:
determine the first duration according to a duration corresponding to one OFDM symbol and a duration required to meet the first channel access type.

In some embodiments, the first indication information is used to indicate the first duration, and the determining unit 320 is further configured to:
obtain a first difference which is a difference between a duration corresponding to one orthogonal frequency division multiplexing (OFDM) symbol and the first duration; and
determine the target channel access type according to the first difference;
where the first difference meets at least one of the following:
   greater than or equal to 25 µs;
   equal to 16 µs; or
   less than or equal to 16 µs.

In some embodiments, the determining unit 320 is specifically configured to:
if the first difference is greater than or equal to 25 µs, determine the Type 2A channle access type as the target channel access type; and/or
if the first difference is equal to 16 µs, determining the Type 2B channle access type as the target channel access type; and/or
if the first difference is less than or equal to 16 µs, determining the Type 2C channle access type as the target channel access type.

In some embodiments, the determining unit 320 is further configured to:
second indication information, where the second indication information is used to indicate performing a transmission lasting the first duration before a start time of a sidelink transmission or after an end time of the sidelink transmission;
determine, according to the second indication information, to perform a transmission lasting the first duration before the start time of the sidelink transmission or after the end time of the sidelink transmission.

In some embodiments, the second indication information is used to indicate performing the transmission lasting the first duration before the start time of the sidelink transmission. The determining unit 320 is further configured to:
perform channel access according to the target channel access type; and
if the channel access succeeds, perform the transmission lasting the first duration and the sidelink transmission.

In some embodiments, the second indication information is used to indicate performing the transmission lasting the first duration after the end time of the sidelink transmission. The determining unit 320 is further configured to:
perform channel access according to the target channel access type; and
if the channel access succeeds, perform the sidelink transmission and the transmission lasting the first duration.

In some embodiments, the transmission lasting the first duration includes data determined according to at least one of the following: cyclic prefix (CP) extension, repetition of data on any orthogonal frequency division multiplexing (OFDM) symbol, a redundant bit, or a padding bit.

In some embodiments, the second indication information is predefined information, or the second indication information is pre-configuration information, or the second indication information is information configured by a network device, or the second indication information is information configured by the second terminal device.

In some embodiments, a priority class of a channel access type determined according to the first indication information is higher than a priority class of a channel access type determined according to the first sidelink SCS.

In some embodiments, the first indication information is predefined information, or the first indication information is pre-configuration information, or the first indication information is information configured by a network device, or the first indication information is information configured by the second terminal device.

In some embodiments, the detection result includes at least one of the following:
whether SCI or a PSCCH is detected;
a sidelink RSRP measurement value;
a sidelink RSSI measurement value;
whether a PSFCH is detected; or
whether a primary synchronization signal, a secondary synchronization signal, or a PSBCH is detected.

In some embodiments, the determining unit 320 is specifically configured to:
if the detection result is used to indicate that the first terminal device has detected a sidelink transmission in the second sidelink transmission opportunity, determine the target channel access type based on the first sidelink SCS and/or the first indication information; and/or
if the detection result is used to indicate that the first terminal device has not detected a sidelink transmission in the second sidelink transmission opportunity, determine a second channel access type as the target channel access type.

In some embodiments, the determining unit 320 is specifically configured to:
if the detection result includes a sidelink reference signal received power (RSRP) measurement value, and the sidelink RSRP measurement value is greater than or equal to a first threshold value, determine the target channel access type according to the first sidelink SCS and/or the first indication information; and/or
if the sidelink RSSI measurement value is less than a second threshold value, determine a second channel access type as the target channel access type.

In some embodiments, the determining unit 320 is specifically configured to:
if the detection result includes a sidelink received signal strength indication (RSSI) measurement value, and the sidelink RSSI measurement value is greater than or equal to a second threshold value, determine the target channel access type according to the first sidelink SCS and/or the first indication information; and/or
if the sidelink RSSI measurement value is less than a second threshold value, determine a second channel access type as the target channel access type.

In some embodiments, the determining unit 320 is specifically configured to:
if the detection result includes that SCI or a PSCCH is detected, determine the target channel access type according to the first sidelink SCS and/or the first indication information; and/or
if the detection result includes that no SCI or PSCCH is detected, determine a second channel access type as the target channel access type; and/or
if the detection result includes that the SCI or PSCCH is detected, and an RSRP measurement value is greater than or equal to a third threshold value, determine the target channel access type based on the first sidelink SCS and/or the first indication information; and/or
if the detection result includes that the SCI or PSCCH is detected, and the sidelink RSRP measurement value is less than the third threshold value, determine the second channel access type as the target channel access type; where the sidelink RSRP measurement value includes an RSRP measurement value based on PSCCH DMRS or an RSRP measurement based on PSSCH DMRS.

In some embodiments, the determining unit 320 is specifically configured to:
if the detection result includes that a primary synchronization signal, a secondary synchronization signal or a PSBCH is detected, determine the target channel access type according to the first sidelink SCS and/or the first indication information; and/or
if the detection result includes that no primary synchronization signal, secondary synchronization signal or PSBCH is detected, determine a second channel access type as the target channel access type; and/or
if the detection result includes that the primary synchronization signal, the secondary synchronization signal or the PSBCH is detected, and a sidelink RSRP measurement value is greater than or equal to a fourth threshold value, determine the target channel access type according to the first sidelink SCS and/or the first indication information; and/or
if the detection result includes that the primary synchronization signal, the secondary synchronization signal or the PSBCH is detected, and the sidelink RSRP measurement value is less than the fourth threshold value, determine the the second channel access type as the target channel access type; where the sidelink RSRP measurement value includes an RSRP measurement value based on PSBCH DMRS.

In some embodiments, the determining unit 320 is specifically configured to:
if the detection result includes that a PSFCH is detected, determining the target channel access type according to the first sidelink SCS and/or the first indication information; and/or
if the detection result includes that no PSFCH is detected, determining a second channel access type as the target channel access type.
In some embodiments, the first threshold value is predefined information, or the first threshold value is pre-configuration information, the first threshold value is information configured by a network device, or the first threshold value is information configured by the second terminal device.

In some embodiments, the second threshold value is predefined information, or the second threshold value is pre-configuration information, the second threshold value is information configured by a network device, or the second threshold value is information configured by the second terminal device.

In some embodiments, the third threshold value is predefined information, or the third threshold value is pre-configuration information, the third threshold value is information configured by a network device, or the third threshold value is information configured by the second terminal device.

In some embodiments, the fourth threshold value is predefined information, or the fourth threshold value is pre-configuration information, the fourth threshold value is information configured by a network device, or the fourth threshold value is information configured by the second terminal device.

In some embodiments, the first threshold value is a threshold value determined according to at least one of the following information: a sidelink priority, a channel access priority class, or a channel busy rate (CBR).

In some embodiments, the second threshold value is a threshold value determined according to at least one of the following information: a sidelink priority, a channel access priority class, or a channel busy rate (CBR).

In some embodiments, the third threshold value is a threshold value determined according to at least one of the following information: a sidelink priority, a channel access priority class, or a channel busy rate (CBR).

In some embodiments, the fourth threshold value is a threshold value determined according to at least one of the following information: a sidelink priority, a channel access priority class, or a channel busy rate (CBR).

In some embodiments, the second channel access type includes the Type 2A channel access type.

In some embodiments, the second channel access type is determined according to predefined information in a protocol, pre-configuration information, network configuration information, or configuration information of the second terminal device.

In some embodiments, the determining unit 320 is further configured to:
determine whether to determine the target channel access type according to the detection result.

In some embodiments, the determining unit 320 is specifically configured to:
obtain third indication information; and
if the third indication information is used to indicate determining the target channel access type based on the detection result, determine the target channel access type based on the detection result.

In some embodiments, the third indication information is predefined information, or the third indication information is pre-configuration information, or the third indication information is information configured by a network device, or the third indication information is information configured by the second terminal device.

In some embodiments, the determining unit 320 is specifically configured to:
if the first interval is greater than or equal to a fifth threshold value, determine the Type 2A channle access type as the target channel access type.

In some embodiments, the fifth threshold value is predefined information, or the fifth threshold value is pre-configuration information, the fifth threshold value is information configured by a network device, or the fifth threshold value is information configured by the second terminal device.

In some embodiments, the first gap is determined according to resource pool configuration information.

In some embodiments, the channel type of the channel to be transmitted includes at least one of the following: a physical sidelink control channel (PSCCH), a physical sidelink shared channel (PSSCH), a physical sidelink feedback channel (PSFCH), or a sidelink synchronization signal block (S-SSB).

In some embodiments, the determining unit 320 is specifically configured to:
if the channel type of the channel to be transmitted includes at least one of a physical sidelink feedback channel (PSFCH) or a sidelink synchronization signal block (S-SSB), determine a third channle access type as the target channel access type, or directly transmit the channel to be transmitted without performing channel access.

In some embodiments, the third channel access type includes the Type 2C channel access type.

In some embodiments, the third channel access type includes the Type 2A channel access type.

In some embodiments, the third channel access type is determined according to predefined information, pre-configuration information, information configured by a network device, or information configured by the second terminal device.

In some embodiments, the determining unit 320 is further configured to:
perform channel access according to the target channel access type; and
determine whether to perform a sidelink transmission in the first sidelink transmission opportunity according to a result of the channel access.

In some embodiments, determining whether to perform the sidelink transmission in the first sidelink transmission opportunity according to the result of the channel access includes:
if the channel access succeeds, perform the sidelink transmission by using the first sidelink transmission opportunity; or
if the channel access fails, abandon the first sidelink transmission opportunity or perform resource reselection.

In some embodiments, the obtaining the first sidelink transmission opportunity for the first terminal device includes:
determining the first sidelink transmission opportunity based on network configuration information or scheduling information; or
determining a sidelink transmission opportunity selected by the first terminal device as the first sidelink transmission opportunity.

In some embodiments, the determining unit 320 is further configured to:
receive COT sharing information transmitted by the second terminal device.

In some embodiments, the COT sharing information includes at least one of the following:
a channel access priority class;
a time offset, used to determine a start time of the shared COT;
duration information, used to indicate a shared COT duration or a remaining COT duration;
identification information, used to determine a terminal device that is allowed to use the shared COT; or
resource block set information or channel information for performing channel access by the second terminal device.

In some embodiments, the determining unit 320 is further configured to:
determine whether it is allowed to use the shared COT according to at least one of the following:
a channel access priority class;
a priority of sidelink data or sidelink channel to be transmitted by the first terminal device;
identification information of the first terminal device;
group identification information of a group in which the first terminal device is located;
type information of a service to be transmitted by the first terminal device;
channel information or resource block set information corresponding to the first sidelink transmission opportunity; or
whether the second terminal device is a target receiving terminal of the sidelink data or sidelink channel to be transmitted by the first terminal device.

It should be understood that the device embodiments and the method embodiments may correspond to each other, and similar descriptions may be referred to the method embodiments. Specifically, the first terminal device 300 shown in FIG. 19 may correspond to a corresponding entity that executes the method 100 in the embodiments of the present application, and the foregoing and other operations and/or functions of each unit of the first terminal device 300 are configured to implement the corresponding procedures in each method, respectively, and will not be repeated herein for brevity.

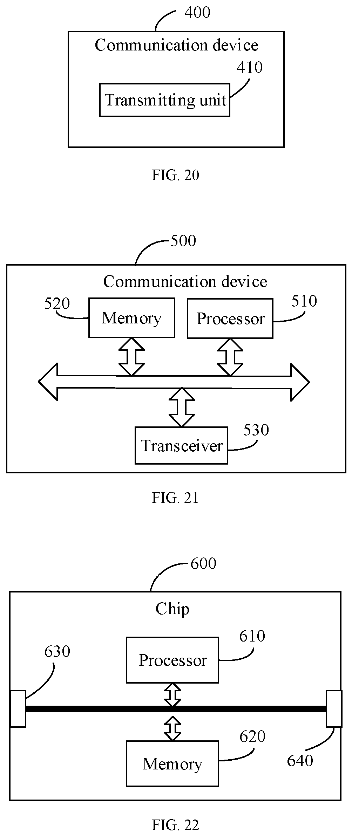

FIG. 20 is a schematic block diagram of a communication device 400 in an embodiment of the present application.

As shown in FIG. 20, the communication device 400 may include:
a transmitting unit, configured to transmit second information to the first terminal device, where the second information is used for the first terminal device to determine a target channel access type when the first terminal device performs channel access within a channel occupation time (COT) shared from the second terminal device.

In some embodiments, the second information includes at least one of the following:
a first correspondence, where the first correspondence includes a conrrespondence between at least one sidelink SCS and at least one channel access type;
first indication information, where the first indication information is used to indicate a first channel access type and/or a first duration;
second indication information, where the second indication information is used to indicate performing a transmission lasting the first duration before a start time of a sidelink transmission or after an end time of the sidelink transmission;
third indication information, where the third indication information is used to determine the target channel access type according to a detection result of the first terminal device;
at least one threshold value corresponding to the detection result; or
a third channel access type.

In some embodiments, the transmission lasting the first duration includes data determined according to at least one of the following: cyclic prefix (CP) extension, repetition of data on any orthogonal frequency division multiplexing (OFDM) symbol, a redundant bit, or a padding bit.

In some embodiments, the method is applied to the second terminal device, and the transmitting unit is further configured to:
transmit COT sharing information to the first terminal device.

In some embodiments, the COT sharing information includes at least one of the following:
a channel access priority class;
a time offset, used to determine a start time of the shared COT;
duration information, used to indicate a shared COT duration or a remaining COT duration;
sharing identification information, used to determine a terminal device that is allowed to use the shared COT; or
resource block set information or channel information for performing channel access by the second terminal device.

It should be understood that the device embodiments and the method embodiments may correspond to each other, and similar descriptions may be referred to the method embodiments. Specifically, the communication device 700 shown in FIG. 20 may correspond to a corresponding entity that executes the method 500 in the embodiments of the present application, and the foregoing and other operations and/or functions of each unit of the communication device 700 are configured to implement the corresponding procedures in each method, respectively.

With reference to the accompanying drawings, the communication device in the embodiments of the present application is described above from the perspective of functional modules. It should be understood that these functional modules may be implemented in the form of hardware, or instructions in the form of software, or a combination of hardware and software modules. Specifically, each step in the method embodiments in the embodiments of the present application may be implemented by hardware integrated logic circuits and/or instructions in the form of software in a processor. The steps of methods disclosed with reference to the embodiments of the present application may be directly implemented by a hardware decoding processor, or may be implemented by a combination of hardware and software modules in a decoding processor. Optionally, the software modules may be located in a storage medium commonly used in the art, such as a random access memory, a flash memory, a read-only memory, a programmable read-only memory, an electrically erasable programmable memory, or a register. The storage medium is located in a memory, and a processor reads information in the memory and implement the steps of the above method embodiments in combination with its hardware.

For example, the above-mentioned obtaining unit 310 and tranmitting unit 410 may be implemented by a transceiver, and the above-mentioned determining unit 320 may be implemented by a processor.

FIG. 21 is a schematic block diagram of a communication device 500 in an embodiment of the present application.

As shown in FIG. 21, the communication device 500 may include a processor.

The processor 510 may call and run a computer program from a memory to implement the methods in the embodiments of the present application.

As shown in FIG. 21, the communication device may further include a memory 520.

The memory 520 may be configured to store indication information, and may further be configured to store codes, instructions, etc., which are executed by the processor 510. The processor 510 may call and run a computer program from the memory 520 to implement the methods in the embodiments of the present application. The memory 520 may be a separate component independent of the processor 510, or may be integrated in the processor 510.

As shown in FIG. 21, the communication device may further include a transceiver 530.

The processor 510 may control the transceiver 530 to communicate with another device, specifically, to transmit information or data to another device, or to receive information or data sent by another device. The transceiver 530 may include a transmitter and a receiver. The transceiver 530 may further include antenna(s), and the number of antenna(s) may be one or more.

It should be understood that the various components of the communication device 500 are connected to each other through a bus system. In addition to a data bus, the bus system further includes a power bus, a control bus, a status signal bus, etc.

It should also be understood that the communication device 500 may be the first terminal device in the embodiments of the present application, and may implement corresponding processes implemented by the first terminal device in various methods in the embodiments of the present application. That is to say, the communication device 500 in the embodiments of the present application may correspond to the first terminal device 300 in the embodiments of the present application, and may correspond to the corresponding entity performing the method 100 according to the embodiments of the present application, which will not be repeated herein for brevity. Similarly, the communication device 500 may be the second terminal device or the network device in the embodiments of the present application, and the communication device 500 may implement corresponding processes implemented by the second terminal device or network device in various methods in the embodiments of the present application. That is to say, the communication device 500 in the embodiments of the present application may correspond to the communication device 400 in the embodiments of the present application, and may correspond to the corresponding entity performing the method 200 according to the embodiments of the present application, which will not be repeated herein for brevity.

In addition, the embodiments of the present application further provide a chip.

For example, the chip may be an integrated circuit chip with signal processing capability, and can implement or execute the methods, steps and logic block diagrams that are disclosed in the embodiments of the present application. The chip may also be referred to as a system-level chip, a system chip, a chip system, or a system on chip. Optionally, the chip may be applied to various communication devices, so that the communication with the chip installed therein can perform the methods, steps and logic block diagrams that are disclosed in the embodiments of the present application.

FIG. 21 is a schematic block diagram of a chip 600 in an embodiment of the present application.

As shown in FIG. 22, the chip 600 may include a processor 610.

The processor 610 may call and run a computer program from a memory to implement the methods in the embodiments of the present application.

As shown in FIG. 22, the chip 600 may further include a memory 620.

The processor 610 may call and run a computer program from the memory 620 to implement the methods in the embodiments of the present application. The memory 620 may be configured to store indication information, and may further be configured to store codes, instructions, etc., which are executed by the processor 610. The memory 620 may be a separate component independent of the processor 610, or may be integrated in the processor 610.

As shown in FIG. 22, the chip 600 may further include an input interface 630.

The processor 610 may control the input interface 630 to communicate with another device or chip, specifically, to obtain information or data transmitted by another device or chip.

As shown in FIG. 22, the chip 600 may further include an output interface 640.

The processor 610 may control the output interface 640 to communicate with other devices or chips, specifically, to output information or data to other devices or chips.

Optionally, the chip may be applied to the second terminal device or network device in the embodiments of the present application, the chip may implement corresponding processes implemented by the second terminal device or network device in various methods in the embodiments of the present application, and the chip may further implement corresponding processes implemented by the first terminal device in various methods in the embodiments of the present application, which will not be repeated herein for brevity.

It should also be understood that the various components of the chip 600 are connected to each other through a bus system. In addition to a data bus, the bus system further includes a power bus, a control bus, a status signal bus, etc.

The processors involved in the above may include, but are not limited to:
a general purpose processor, a digital signal processor (DSP), an application specific integrated circuit (ASIC), a field programmable gate array (FPGA), or another programmable logic device, a discrete gate or transistor logic device, or a discrete hardware component.

The processor may be configured to implement or perform methods, steps and logical block diagrams that are disclosed in the embodiments of the present application. The steps of the method disclosed with reference to the embodiments of the present application may be directly implemented by a hardware decoding processor, or may be executed and completed by a combination of hardware and software modules in a decoding processor. The software modules may be located in a storage medium commonly used in the art, such as a random access memory, a flash memory, a read-only memory, a programmable read-only memory or an erasable programmable memory, or a register. The storage medium is located in a memory, and the processor reads information in the memory and completes the steps of the above methods in combination with hardware of the processor.

The memories involved in the above include, but are not limited to.
volatile and non-volatile memories. The non-volatile memory may be a read-only memory (ROM), a programmable read-only memory (PROM), an erasable programmable read-only memory (EPROM), or an electrically erasable programmable read-only memory (EEPROM) or a flash memory. The transitory memory may be a random access memory (RAM) which serves as an external cache. As an example, but not as a limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM).

It should be noted that the memories described herein are intended to include these and any other memories of suitable types.

The embodiments of the present application further provide a computer-readable storage medium, configured to store a computer program. The computer-readable storage medium stores one or more programs including instructions which, when executed by a portable electronic device including multiple application programs, cause the portable electronic device to perform the wireless communication methods provided by the present application. Optionally, the computer-readable storage medium may be applied to the second terminal device or network device in the embodiments of the present application, and the computer program causes a computer to perform corresponding processes implemented by the second terminal device or network device in various methods in the embodiments of the present application, which will not be repeated herein for brevity. Optionally, the computer-readable storage medium may be applied to the first terminal device in the embodiments of the present application, and the computer program causes a computer to perform corresponding processes implemented by the first terminal device in various methods in the embodiments of the present application, which will not be repeated herein for brevity.

The embodiments of the present application further provide a computer program product which includes a computer program. Optionally, the computer program product may be applied to the second terminal device or network device in the embodiments of the present application, and the computer program causes a computer to perform corresponding processes implemented by the second terminal device or network device in various methods in the embodiments of the present application, which will not be repeated herein for brevity. Optionally, the computer program product may be applied to the mobile terminal/terminal device in the embodiments of the present application, and the computer program instructions cause a computer to perform corresponding processes implemented by the first terminal device in various methods in the embodiments of the present application, which will not be repeated herein for brevity.

The embodiments of the present application further provide a computer program. When the computer program is executed by a computer, the computer program causes the computer to perform the wireless communication methods provided by the present application. Optionally, the computer program may be applied to the second terminal device or network device in the embodiments of the present application, and when executed on a computer, the computer program causes the computer to perform corresponding processes implemented by the second terminal device or network device in various methods in the embodiments of the present application, which will not be repeated herein for brevity. Optionally, the computer program may be applied to the first terminal device in the embodiments of the present application, and when executed on a computer, the computer program causes the computer to perform corresponding processes implemented by the first terminal device in various methods in the embodiments of the present application, which will not be repeated herein for brevity.

The embodiments of the present application further provide a communication system, which includes the first terminal device, the second terminal device and the network device involved in the above, which will not be repeated herein for brevity. It will be noted that the term "system" herein may also be referred to as "network management architecture", "network system", or the like.

It should also be understood that the terms used in the embodiments of the present application and the accompanying claims are for the purpose of describing specific embodiments only but are not intended to limit the embodiments of the present application. For example, the singular forms "a/an", "the", "the above" and "this/these" used in the embodiments of the present application and the accompanying claims are also intended to include the plural forms unless the context clearly indicates other meanings.

Those skilled in the art may recognize that the exemplary units and algorithm steps described in combination with the embodiments disclosed herein can be implemented in electronic hardware, or a combination of computer software and electronic hardware. Whether these functions are implemented in a form of hardware or software depends on a specific application and a design constraint of a technical solution. Those skilled in the art may use different methods to implement the described functions in respect to each particular application, but such implementation should not be considered to be beyond the scope of embodiments of the present application. The function units may be stored in a computer readable storage medium if implemented in a form of software functional units and sold or used as a separate product. Based on such understanding, the technical solutions in the embodiments of the present application, in essence, or the part contributing to the existing technology, or a part of the technical solution, may be embodied in a form of a software product. The computer software product is stored in a storage medium, including several instructions for enabling a computer device (which may be a personal computer, a server, a network device, or the like) to perform all or some of the steps of the methods described in various embodiments of the present application. And the aforementioned storage media include various kinds of media capable of storing program codes, such as a µsB flash disk, a removable hard disk, a read-only memory (ROM), a random access memory (RAM), a magnetic disk, an optical disk, and the like.

Those skilled in the art may clearly learn that for convenience and conciseness of description, the specific working processes of the systems, devices and units described above may refer to the corresponding processes in the aforementioned method embodiments and are not repeated here again. In several embodiments provided by the present application, it should be understood that the disclosed systems, devices and methods may be implemented in another manner. For example, the division of the units, modules or components in the above-mentioned device embodiments is only a logical function division, and there may be another division manner in an actual implementation. For example, multiple units, modules or components may be combined or integrated into another system, or some units or components may be ignored or not executed. As another example, the units/modules/components described in the above as separate/display components may or may not be physically separated, that is, they may be located in a single place or may be distributed over multiple network units. Some or all of the units/modules/components therein may be selected according to actual needs to achieve purposes of technical solutions of the embodiments. Finally, it will be noted that the mutual coupling or direct coupling or communication connection shown or discussed in the above may be indirect coupling or communication connection through some interfaces, devices or units, and may be in electrical, mechanical or other forms.

What are described above are merely specific embodiments of the present application, but the protection scope of the embodiments of the present application is not limited thereto. The protection scope of the embodiments of the present application shall be subject to the protection scope of the claims.

## Claims

1. A wireless communication method, performed by a first terminal device and comprising:
obtaining (S110) a first sidelink transmission opportunity for the first terminal device; wherein
a time unit where the first sidelink transmission opportunity is located is within a channel occupation time, COT, shared from a second terminal device;
determining (S120) a target channel access type to be used by the first terminal device based on first information; **characterized by**
the first information comprising at least one of the following information:
a first sidelink subcarrier spacing, SCS;
first indication information, wherein the first indication information is used to indicate a first duration, the first duration results in a duration of a first gap between a start time of the first sidelink transmission opportunity and an end time of a second sidelink transmission opportunity to meet a duration needed for a channel access type, and the second sidelink transmission opportunity is a sidelink transmission opportunity prior to and adjacent to the first sidelink transmission opportunity;
a detection result directed to the second sidelink transmission opportunity;
the first gap; or
a channel type of a channel to be transmitted, wherein the channel to be transmitted is a channel to be transmitted by the first terminal device in the first sidelink transmission opportunity.

2. The method according to claim 1, wherein the first indication information is used to indicate the first duration; the method further comprises:
obtaining a first difference, wherein the first difference is a difference between a duration corresponding to one orthogonal frequency division multiplexing, OFDM, symbol and the first duration; and
determining the target channel access type according to the first difference;
wherein the first difference meets at least one of the following:
greater than or equal to 25 microsecond, µs;
equal to 16 µs; or
less than or equal to 16 µs.

3. The method according to claim 2, wherein determining the target channel access type according to the first difference comprises:
if the first difference is greater than or equal to 25 µs, determining Type 2A channel access as the target channel access type; and/or
if the first difference is equal to 16 µs, determining Type 2B channel access as the target channel access type; and/or
if the first difference is less than or equal to 16 µs, determining Type 2C channel access as the target channel access type.

4. The method according to claim 2 or 3, wherein the method further comprises:
obtaining second indication information, wherein the second indication information is used to indicate performing a transmission lasting the first duration before a start time of a sidelink transmission or after an end time of the sidelink transmission; and
determining, according to the second indication information, to perform the transmission lasting the first duration before the start time of the sidelink transmission or after the end time of the sidelink transmission.

5. The method according to claim 4, wherein the second indication information is used to indicate performing the transmission lasting the first duration before the start time of the sidelink transmission; the method further comprises:
performing channel access according to the target channel access type; and
if the channel access succeeds, performing the transmission lasting the first duration and the sidelink transmission.

6. The method according to claim 4 or 5, wherein the transmission lasting the first duration comprises data determined according to at least one of the following: cyclic prefix, CP, extension, repetition of data on any orthogonal frequency division multiplexing, OFDM, symbol, a redundant bit, or a padding bit.

7. The method according to any one of claims 1 to 6, wherein determining (S120) the target channel access type to be used by the first terminal device based on the first information comprises:
if the first gap is greater than or equal to a fifth threshold value, determining a Type 2A channel access type as the target channel access type.

8. The method according to any one of claims 1 to 7, wherein the channel type of the channel to be transmitted comprises at least one of the following: a physical sidelink control channel, PSCCH, a physical sidelink shared channel, PSSCH, a physical sidelink feedback channel, PSFCH, or a sidelink synchronization signal block, S-SSB.

9. The method according to any one of claims 1 to 8, wherein the method further comprises:
performing channel access according to the target channel access type; and
determining whether to perform a sidelink transmission in the first sidelink transmission opportunity according to a result of the channel access.

10. The method according to any one of claims 1 to 9, wherein the method further comprises:
receiving COT sharing information transmitted by the second terminal device.

11. The method according to claim 10, wherein the COT sharing information comprises at least one of the following:
a channel access priority class;
a time offset, used to determine a start time of the shared COT;
duration information, used to indicate a shared COT duration or a remaining COT duration;
identification information, used to determine a terminal device that is allowed to use the shared COT; or
resource block set information or channel information for performing channel access by the second terminal device.

12. The method according to any one of claims 1 to 11, wherein the method further comprises:
determine whether it is allowed to use the shared COT according to at least one of the following:
a channel access priority class;
a priority of sidelink data or sidelink channel to be transmitted by the first terminal device;
identification information of the first terminal device;
group identification information of a group in which the first terminal device is located;
type information of a service to be transmitted by the first terminal device;
channel information or resource block set information corresponding to the first sidelink transmission opportunity; or
whether the second terminal device is a target receiving terminal of the sidelink data or sidelink channel to be transmitted by the first terminal device.

13. A first terminal device (500), comprising:
a processor (510) and a memory (520), wherein the memory (520) is configured to store a computer program, and the processor (510) is configured to call and run the computer program stored in the memory (520) to cause the first terminal device (500) to perform the method according to any one of claims 1 to 12.

14. A computer-readable storage medium, configured to store a computer program that causes a computer to perform the method according to any one of claims 1 to 12.

15. A computer program product, comprising computer program instructions that cause a computer to perform the method according to any one of claims 1 to 12.

## Patentansprüche

1. Drahtloskommunikationsverfahren, das durch ein erstes Endgerät durchgeführt wird und Folgendes umfasst:
Erhalten (S110) einer ersten Sidelink-Übertragungsmöglichkeit für das erste Endgerät; wobei eine Zeiteinheit, in der die erste Sidelink-Übertragungsmöglichkeit sich befindet, in einer Kanalbelegungszeit, COT, ist, die von einem zweiten Endgerät gemeinsam verwendet wird;
Bestimmen (S120) eines Zielkanalzugriffstyps, der durch das erste Endgerät verwendet werden soll, auf der Grundlage erster Informationen;
**dadurch gekennzeichnet, dass** die ersten Informationen mindestens eine der folgenden Informationen umfassen:
einen ersten Sidelink-Unterträgerabstand, SCS;
erste Anzeigeinformationen, wobei die ersten Anzeigeinformationen verwendet werden, um eine erste Dauer anzuzeigen, die erste Dauer darin resultiert, dass eine Dauer einer ersten Lücke zwischen einer Startzeit der ersten Sidelink-Übertragungsmöglichkeit und einer Endzeit einer zweiten Sidelink-Übertragungsmöglichkeit eine Dauer erfüllt, die für einen Kanalzugriffstyp erforderlich ist, und die zweite Sidelink-Übertragungsmöglichkeit eine Sidelink-Übertragungsmöglichkeit vor und benachbart zu der ersten Sidelink-Übertragungsmöglichkeit ist;
ein Detektionsergebnis, das zur zweiten Sidelink-Übertragungsmöglichkeit gerichtet ist;
die erste Lücke oder
einen Kanaltyp eines zu übertragenden Kanals, wobei der zu übertragende Kanal ein Kanal ist, der durch das erste Endgerät in der ersten Sidelink-Übertragungsmöglichkeit übertragen werden soll.

2. Verfahren nach Anspruch 1, wobei die ersten Anzeigeinformationen verwendet werden, um die erste Dauer anzuzeigen; und das Verfahren ferner Folgendes umfasst:
Erhalten einer ersten Differenz, wobei die erste Differenz eine Differenz zwischen einer Dauer, die einem orthogonalen Frequenzmultiplexsymbol, OFDM-Symbol, entspricht, und der ersten Dauer ist; und
Bestimmen des Zielkanalzugriffstyps gemäß der ersten Differenz;
wobei die erste Differenz mindestens eines der Folgenden erfüllt:
größer oder gleich 25 Mikrosekunden, µs;
gleich 16 µs oder
kleiner oder gleich 16 µs.

3. Verfahren nach Anspruch 2, wobei das Bestimmen des Zielkanalzugriffstyps gemäß der ersten Differenz Folgendes umfasst:
falls die erste Differenz größer oder gleich 25 µs ist, Bestimmen eines Kanalzugriffs des Typs 2A als den Zielkanalzugriffstyp; und/oder
falls die erste Differenz gleich 16 µs ist, Bestimmen eines Kanalzugriffs des Typs 2B als den Zielkanalzugriffstyp; und/oder
falls die erste Differenz kleiner oder gleich 16 µs ist, Bestimmen eines Kanalzugriffs des Typs 2C als den Zielkanalzugriffstyp.

4. Verfahren nach Anspruch 2 oder 3, wobei das Verfahren ferner Folgendes umfasst:
Erhalten von zweiten Anzeigeinformationen, wobei die zweiten Anzeigeinformationen verwendet werden, um ein Durchführen einer Übertragung anzuzeigen, die die erste Dauer vor einer Startzeit einer Sidelink-Übertragung oder nach einer Endzeit der Sidelink-Übertragung dauert; und
Bestimmen gemäß den zweiten Anzeigeinformationen, die Übertragung durchzuführen, die die erste Dauer vor der Startzeit der Sidelink-Übertragung oder nach der Endzeit der Sidelink-Übertragung dauert.

5. Verfahren nach Anspruch 4, wobei die zweiten Anzeigeinformationen verwendet werden, um ein Durchführen der Übertragung anzuzeigen, die die erste Dauer vor der Startzeit der Sidelink-Übertragung dauert; und das Verfahren ferner Folgendes umfasst:
Durchführen eines Kanalzugriffs gemäß dem Zielkanalzugriffstyp und
falls der Kanalzugriff erfolgreich ist, Durchführen der Übertragung, die die erste Dauer dauert, und der Sidelink-Übertragung.

6. Verfahren nach Anspruch 4 oder 5, wobei die Übertragung, die die erste Dauer dauert, Daten umfasst, die gemäß mindestens einem der Folgenden bestimmt werden: einer zyklischen Präfixerweiterung, CP-Erweiterung, einer Wiederholung von Daten in einem beliebigen orthogonalen Frequenzmultiplexsymbol, OFDM-Symbol, einem redundanten Bit oder einem Auffüllbit.

7. Verfahren nach einem der Ansprüche 1 bis 6, wobei das Bestimmen (S120) des Zielkanalzugriffstyps, der durch das erste Endgerät verwendet werden soll, auf der Grundlage der ersten Informationen Folgendes umfasst: falls die erste Lücke größer oder gleich einem fünften Schwellenwert ist, Bestimmen eines Kanalzugriffstyps des Typs 2A als den Zielkanalzugriffstyp.

8. Verfahren nach einem der Ansprüche 1 bis 7, wobei der Kanaltyp des Kanals, der übertragen werden soll, mindestens eines der Folgenden umfasst: einen physischen Sidelink-Steuerkanal, PSCCH, einen physischen gemeinsam verwendeten Sidelink-Kanal, PSSCH, einen physischen Sidelink-Rückkopplungskanal, PSFCH, oder einen Sidelink-Synchronisationssignalblock, S-SSB.

9. Verfahren nach einem der Ansprüche 1 bis 8, wobei das Verfahren ferner Folgendes umfasst:
Durchführen eines Kanalzugriffs gemäß dem Zielkanalzugriffstyp und
Bestimmen, ob eine Sidelink-Übertragung in der ersten Sidelink-Übertragungsmöglichkeit durchgeführt werden soll, gemäß einem Ergebnis des Kanalzugriffs.

10. Verfahren nach einem der Ansprüche 1 bis 9, wobei das Verfahren ferner Folgendes umfasst:
Empfangen von Informationen zum gemeinsamen Verwenden einer COT, die durch das zweite Endgerät übertragen werden.

11. Verfahren nach Anspruch 10, wobei die Informationen zum gemeinsamen Verwenden einer COT mindestens eines der Folgenden umfassen:
eine Kanalzugriffsprioritätsklasse;
einen Zeitversatz, der verwendet wird, um eine Startzeit der gemeinsam verwendeten COT zu bestimmen;
Dauerinformationen, die verwendet werden, um eine gemeinsam verwendete COT-Dauer oder eine verbleibende COT-Dauer anzuzeigen;
Identifizierungsinformationen, die verwendet werden, um ein Endgerät zu bestimmen, dem erlaubt ist, die gemeinsam verwendete COT zu verwenden; oder
Betriebsmittelblockeinstellungsinformationen oder Kanalinformationen zum Durchführen eines Kanalzugriffs durch das zweite Endgerät.

12. Verfahren nach einem der Ansprüche 1 bis 11, wobei das Verfahren ferner Folgendes umfasst:
Bestimmen, ob es zulässig ist, die gemeinsam verwendete COT zu verwenden, gemäß mindestens einem der Folgenden:
einer Kanalzugriffsprioritätsklasse;
einer Priorität von Sidelink-Daten oder eines Sidelink-Kanals, die durch das erste Endgerät übertragen werden sollen;
Identifizierungsinformationen des ersten Endgeräts;
Gruppenidentifizierungsinformationen einer Gruppe, in der das erste Endgerät sich befindet;
Typinformationen eines Diensts, der durch das erste Endgerät übertragen werden soll;
Kanalinformationen oder Betriebsmittelblockeinstellungsinformationen, die der ersten Sidelink-Übertragungsmöglichkeit entsprechen; oder
ob das zweite Endgerät ein Zielempfangsendgerät der Sidelink-Daten oder des Sidelink-Kanals, der durch das erste Endgerät übertragen werden soll, ist.

13. Erstes Endgerät (500), das Folgendes umfasst:
einen Prozessor (510) und einen Speicher (520), wobei der Speicher (520) konfiguriert ist, ein Computerprogramm zu speichern, und der Prozessor (510) konfiguriert ist, das Computerprogramm, das im Speicher (520) gespeichert ist, aufzurufen und auszuführen, um zu verursachen, dass das erste Endgerät (500) das Verfahren nach einem der Ansprüche 1 bis 12 durchführt.

14. Computerlesbares Speichermedium, das konfiguriert ist, ein Computerprogramm zu speichern, das verursacht, dass ein Computer das Verfahren nach einem der Ansprüche 1 bis 12 durchführt.

15. Computerprogrammprodukt, das Computerprogrammbefehle umfasst, die verursachen, dass ein Computer das Verfahren nach einem der Ansprüche 1 bis 12 durchführt.

## Revendications

1. Procédé de communication sans fil, réalisé par un premier dispositif terminal et comprenant :
l'obtention (S110) d'une première opportunité de transmission en liaison latérale pour le premier dispositif terminal ;
une unité de temps dans laquelle est située la première opportunité de transmission en liaison latérale s'inscrivant dans un temps d'occupation de canal, COT, partagé par un deuxième dispositif terminal ;
la détermination (S120) d'un type d'accès au canal cible à utiliser par le premier dispositif terminal sur la base de premières informations ; **caractérisé en ce que**
les premières informations comprennent au moins un élément dans le groupe d'informations constitué par :
un premier espacement de sous-porteuses en liaison latérale, SCS ;
des premières informations d'indication, les premières informations d'indication étant utilisées pour indiquer une première durée, la première durée étant telle qu'une durée d'un premier intervalle entre un instant de début de la première opportunité de transmission en liaison latérale et un instant de fin d'une deuxième opportunité de transmission en liaison latérale est conforme à une durée requise pour un type d'accès au canal, et la deuxième opportunité de transmission en liaison latérale étant une opportunité de transmission en liaison latérale antérieure et adjacente à la première opportunité de transmission en liaison latérale ;
un résultat de détection portant sur la deuxième opportunité de transmission en liaison latérale ;
le premier intervalle ; ou
un type de canal d'un canal à transmettre, le canal à transmettre étant un canal à transmettre par le premier dispositif terminal dans la première opportunité de transmission en liaison latérale.

2. Procédé selon la revendication 1, dans lequel les premières informations d'indication sont utilisées pour indiquer la première durée ; le procédé comprenant en outre :
l'obtention d'une première différence, la première différence étant une différence entre une durée correspondant à un symbole de multiplexage par répartition orthogonale de la fréquence, OFDM, et la première durée ; et
la détermination du type d'accès au canal cible selon la première différence ;
la première différence remplissant au moins l'une des conditions suivantes :
elle est supérieure ou égale à 25 microsecondes, µs ;
elle est égale à 16 µs ; ou
elle est inférieure ou égale à 16 µs.

3. Procédé selon la revendication 2, dans lequel la détermination du type d'accès au canal cible selon la première différence comprend :
si la première différence est supérieure ou égale à 25 µs, la détermination d'un accès au canal de Type 2A comme type d'accès au canal cible ; et/ou
si la première différence est égale à 16 µs, la détermination d'un accès au canal de Type 2B comme type d'accès au canal cible ; et/ou
si la première différence est inférieure ou égale à 16 µs, la détermination d'un accès au canal de Type 2C comme type d'accès au canal cible.

4. Procédé selon la revendication 2 ou 3, le procédé comprenant en outre :
l'obtention de deuxièmes informations d'indication, les deuxièmes informations d'indication étant utilisées pour indiquer la réalisation d'une transmission d'une durée égale à la première durée avant un instant de début d'une transmission en liaison latérale ou après un instant de fin de la transmission en liaison latérale ; et
la détermination, selon les deuxièmes informations d'indication, de réaliser la transmission d'une durée égale à la première durée avant l'instant de début de la transmission en liaison latérale ou après l'instant de fin de la transmission en liaison latérale.

5. Procédé selon la revendication 4, dans lequel les deuxièmes informations d'indication sont utilisées pour indiquer la réalisation de la transmission d'une durée égale à la première durée avant l'instant de début de la transmission en liaison latérale ; le procédé comprenant en outre :
la réalisation d'un accès au canal selon le type d'accès au canal cible ; et
en cas de succès de l'accès au canal, la réalisation de la transmission d'une durée égale à la première durée et de la transmission en liaison latérale.

6. Procédé selon la revendication 4 ou 5, dans lequel la transmission d'une durée égale à la première durée comprend des données déterminées selon au moins l'un des éléments suivants : une extension de préfixe cyclique, CP, une répétition de données sur un quelconque symbole de multiplexage par répartition orthogonale de la fréquence, OFDM, un bit redondant, ou bit de remplissage.

7. Procédé selon l'une quelconque des revendications 1 à 6, dans lequel la détermination (S120) du type d'accès au canal cible à utiliser par le premier dispositif terminal sur la base des premières informations comprend :
si le premier intervalle est supérieur ou égal à une cinquième valeur seuil, la détermination d'un type d'accès au canal de Type 2A comme type d'accès au canal cible.

8. Procédé selon l'une quelconque des revendications 1 à 7, dans lequel le type de canal du canal à transmettre comprend au moins l'un des éléments suivants : un canal physique de commande en liaison latérale, PSCCH, un canal physique partagé en liaison latérale, PSSCH, un canal physique de retour en liaison latérale, PSFCH, ou un bloc de signaux de synchronisation en liaison latérale, S-SSB.

9. Procédé selon l'une quelconque des revendications 1 à 8, le procédé comprenant en outre :
la réalisation d'un accès au canal selon le type d'accès au canal cible ; et
la détermination s'il convient ou non de réaliser une transmission en liaison latérale dans la première opportunité de transmission en liaison latérale selon un résultat de l'accès au canal.

10. Procédé selon l'une quelconque des revendications 1 à 9, le procédé comprenant en outre :
la réception d'informations de partage de COT transmises par le deuxième dispositif terminal.

11. Procédé selon la revendication 10, dans lequel les informations de partage de COT comprennent au moins l'un des éléments suivants :
une classe de priorité d'accès au canal ;
un décalage temporel, utilisé pour déterminer un instant de début du COT partagé ;
des informations de durée, utilisées pour indiquer une durée de COT partagé ou une durée restante de COT ;
des informations d'identification, utilisées pour déterminer un dispositif terminal autorisé à utiliser le COT partagé ; ou
des informations d'ensemble de blocs de ressources ou des informations de canal pour la réalisation d'un accès au canal par le deuxième dispositif terminal.

12. Procédé selon l'une quelconque des revendications 1 à 11, le procédé comprenant en outre :
la détermination de l'autorisation ou non d'utiliser le COT partagé selon au moins l'un des éléments suivants :
une classe de priorité d'accès au canal ;
une priorité de données en liaison latérale ou d'un canal en liaison latérale à transmettre par le premier dispositif terminal ;
des informations d'identification du premier dispositif terminal ;
des informations d'identification de groupe d'un groupe auquel appartient le premier dispositif terminal ;
des informations de type d'un service à transmettre par le premier dispositif terminal ;
des informations de canal ou des informations d'ensemble de blocs de ressources correspondant à la première opportunité de transmission en liaison latérale ; ou
si le deuxième dispositif terminal est ou non un terminal de réception cible des données en liaison latérale ou du canal en liaison latérale à transmettre par le premier dispositif terminal.

13. Premier dispositif terminal (500), comprenant :
un processeur (510) et une mémoire (520), la mémoire (520) étant configurée pour stocker un programme d'ordinateur, et le processeur (510) étant configuré pour appeler et exécuter le programme d'ordinateur stocké dans la mémoire (520) afin d'amener le premier dispositif terminal (500) à réaliser le procédé selon l'une quelconque des revendications 1 à 12.

14. Support de stockage lisible par ordinateur, configuré pour stocker un programme d'ordinateur qui amène un ordinateur à réaliser le procédé selon l'une quelconque des revendications 1 à 12.

15. Produit programme d'ordinateur, comprenant des instructions de programme d'ordinateur qui amènent un ordinateur à réaliser le procédé selon l'une quelconque des revendications 1 à 12.
